# EUROPEAN PATENT SPECIFICATION

(11) **EP 4 107 902 B1**
(45) Date of publication and mention of the grant of the patent: **14.06.2023**
(21) Application number: 21717511.6
(22) Date of filing: 26.02.2021
(51) Int. Cl.: H04L 9/08

(54) **A METHOD FOR QUANTUM KEY DISTRIBUTION, A METHOD FOR TRANSMITTING AN OPTICAL SIGNAL, A METHOD FOR RECEIVING AN OPTICAL SIGNAL, AND A RECEIVER OF AN OPTICAL SIGNAL FOR QUANTUM KEY DISTRIBUTION**
VERFAHREN ZUR VERTEILUNG VON QUANTENSCHLÜSSELN, VERFAHREN ZUR ÜBERTRAGUNG EINES OPTISCHEN SIGNALS, VERFAHREN ZUR AUFNAHME EINES OPTISCHEN SIGNALS UND EMPFÄNGER EINES OPTISCHEN SIGNALS ZUR VERTEILUNG VON QUANTENSCHLÜSSELN
PROCÉDÉ DE DISTRIBUTION QUANTIQUE DE CLÉ, PROCÉDÉ D'ÉMISSION D'UN SIGNAL OPTIQUE, PROCÉDÉ DE RÉCEPTION D'UN SIGNAL OPTIQUE ET RÉCEPTEUR D'UN SIGNAL OPTIQUE POUR DISTRIBUTION QUANTIQUE DE CLÉ

(30) Priority: 29.02.2020 PL 43310820
(43) Date of publication of application: 28.12.2022
(73) Proprietor: Uniwersytet Warszawski, 00-927 Warszawa (PL); Uniwersytet Gdanski, 80-309 Gdansk (PL)
(72) Inventor: PAWLOWSKI, Marcin, 81-461 Gdynia (PL); JACHURA, Michal, 02-353 Warszawa (PL); JARZYNA, Marcin, Piaseczno 05-500 (PL); BANASZEK, Konrad, 02-606 Warszawa (PL)
(74) Representative: AOMB Polska Sp. z.o.o.
(86) International application number: PCT/IB2021/051623
(87) International publication number: WO 2021/171248

(56) References cited:
- FUMIN WANG ET AL: "Towards practical high-speed high dimensional quantum key distribution using partial mutual unbiased basis of photon's orbital angular momentum", ARXIV.ORG, CORNELL UNIVERSITY LIBRARY, 201 OLIN LIBRARY CORNELL UNIVERSITY ITHACA, NY 14853, 19 January 2018 (2018-01-19), XP081208204,
- ZEITLER CHRIS ET AL: "Super-dense teleportation for space applications", PROCEEDINGS OF SPIE; [PROCEEDINGS OF SPIE ISSN 0277-786X VOLUME 10524], SPIE, US, vol. 9739, 15 March 2016 (2016-03-15), pages 973912-973912, XP060065610, DOI: 10.1117/12.2218282 ISBN: 978-1-5106-1533-5
- MANUEL ERHARD ET AL: "Advances in High Dimensional Quantum Entanglement", ARXIV.ORG, CORNELL UNIVERSITY LIBRARY, 201 OLIN LIBRARY CORNELL UNIVERSITY ITHACA, NY 14853, 22 November 2019 (2019-11-22), XP081537787,
- XIAO-MIN HU ET AL: "Beating the channel capacity limit for superdense coding with entangled ququarts", ARXIV.ORG, CORNELL UNIVERSITY LIBRARY, 201 OLIN LIBRARY CORNELL UNIVERSITY ITHACA, NY 14853, 27 July 2018 (2018-07-27), XP081251478, DOI: 10.1126/SCIADV.AAT9304
- YIYU ZHOU ET AL: "High-dimensional free-space quantum key distribution using spin, azimuthal, and radial quantum numbers", ARXIV.ORG, CORNELL UNIVERSITY LIBRARY, 201 OLIN LIBRARY CORNELL UNIVERSITY ITHACA, NY 14853, 26 September 2018 (2018-09-26), XP081087470,
- FEIHU XU ET AL: "Secure quantum key distribution with realistic devices", ARXIV.ORG, CORNELL UNIVERSITY LIBRARY, 201 OLIN LIBRARY CORNELL UNIVERSITY ITHACA, NY 14853, 21 March 2019 (2019-03-21), XP081603175,
- TAKESUE HIROKI ET AL: "Long-Distance Quantum Teleportation and High-Dimensional Entanglement Distribution Over Optical Fiber", 2018 IEEE PHOTONICS SOCIETY SUMMER TOPICAL MEETING SERIES (SUM), IEEE, 9 July 2018 (2018-07-09), pages 243-244, XP033399211, DOI: 10.1109/PHOSST.2018.8456795 [retrieved on 2018-09-05]
- TAKUYA IKUTA ET AL: "Enhanced violation of the Collins-Gisin-Linden-Massar-Popescu inequality with optimized time-bin-entangled ququarts", ARXIV.ORG, CORNELL UNIVERSITY LIBRARY, 201 OLIN LIBRARY CORNELL UNIVERSITY ITHACA, NY 14853, 4 February 2016 (2016-02-04), XP080681616, DOI: 10.1103/PHYSREVA.93.022307

## Description

### Technical field

The object of the invention is a method for quantum key distribution with the use of optical pulses, understood as optical signals, a method for transmitting optical pulses dedicated for quantum key distribution, a method for receiving an optical signal dedicated to quantum key distribution, and a receiver of the optical signal for quantum key distribution. Particularly, the invention is implemented with the use of very weak optical pulses/signals. Distribution of the cryptographic key is implemented by means of a transmitter and a receiver, between which quantum key distribution occurs, or alternatively by means of a source of time-energy entangled photon pairs, each of which is directed to one of the pair of receivers placed in locations, between which distribution of the cryptographic key occurs.

### State of the art

In the prior art there is a known method of quantum cryptography, which is a set of procedures used to convey secret (encrypted) messages with safety guaranteed by fundamental laws of quantum mechanics [N. Gisin, G. Ribordy, W. Tittel, and H. Zbinden "Quantum Cryptography" Review of Modern Physics 74, 145-195, 2002]. The most important element of quantum cryptography is quantum key distribution (QKD), which enables two communicating parties to generate a random secret key (e.g. a sequence of bits), which can be later used to encrypt and decrypt messages, and at the same time it is with absolute certainty unknown to any third party. Quantum key distribution is often equated with quantum cryptography, since it constitutes its most important element, while others consider it to be a separate field of science.

Quantum key distribution is usually implemented by means of a transmitter and a receiver, where the transmitter prepares and generates a quantum signal (i.e. a signal representing a quantum mechanical observable, like, for example, the state of polarisation of single photon or its temporal-spectral mode), and the receiver receives and measures the signal (*prepare and measure*)*.* An important and exceptional feature of quantum key distribution is the possibility to detect eavesdropping of third parties trying to acquire information about the key. This results from the fundamental properties of quantum mechanics: the process of measuring a quantum system (e.g. a photon) disrupts this system, affecting the results of later measurements. When trying to eavesdrop, a third party must measure the state of this system, in this manner introducing interference, which is noticeable to people participating in the distribution of the key. Quantum key distribution protocols are based on the phenomena of quantum superposition and/or quantum entanglement, requiring the transfer of information in the form of qubits, which are the equivalents of a bit for quantum information. A frequent physical implementation of a qubit for the purpose of quantum cryptography is the state of polarisation of a photon or its temporal-spectral mode. In addition, if the amount of eavesdropped information does not exceed a certain threshold, which both parties engaged in communication can conclude based on the rate of detected errors, a shorter key may be generated from the initial key, which will be completely unknown to third parties, therefore providing safety of communication. In contrast to quantum key distribution protocols, the safety of classical protocols (symmetric and asymmetric) is based on computational complexity of one-way functions, and they provide no possibility of the detection of eavesdropping or of guaranteeing unconditional safety of the key. The development of computers and special algorithms can endanger the safety of classically encrypted data, in particular considering the attempts at the construction of quantum computers [F. Arute et al. "Quantum supremacy using a programmable superconducting processor" Nature, 574, 505-511, 2019]. The use of quantum cryptography reduces this risk.

Upon the performance of quantum distribution of the cryptographic key, a secret message can be encrypted with the key treated as a one-time pad. The message encrypted in such a manner can be transmitted using standard means of communication, since its public disclosure does not entail the risk of unauthorised decryption. Due to the usually small number of secret key bits, work is also underway on other methods for encrypting messages, e.g. using the key as a seed of pseudorandom number generators enabling the creation of a longer secondary key with a lower safety level.

In the technology of quantum key distribution, there are three known basic protocols: (i) BB84 (ii) E91 (iii) SARG04:
(i) the BB84 protocol is a quantum key distribution protocol developed by Charles Bennett and Gilles Brassard in 1984 [Bennett, Charles H., Brassard, Gilles. Quantum Cryptography: Public key distribution and coin tossing. "Proceedings of the IEEE International Conference on Computers, Systems, and Signal Processing, Bangalore", 1984, p. 175]. BB84 is the first protocol of cryptography whose safety has been based on the fundamental laws of quantum mechanics, and not on technical limitations (deficiency of computational performance), like in the case of classical protocols (e.g. RSA). The objective of the BB84 protocol is to safely transmit a random sequence of bits (cryptographic key) being in possession of a transmitting party to a receiving party, so that information about it would not be intercepted by third parties. In the BB84 protocol, a random sequence of *n*-bits being in possession of the transmitting party is mapped onto the states of *n* qubits, implemented physically as the states of polarisation of *n* single photons or *n* heavily weakened laser pulses, which are subsequently transmitted to the receiving party by means of an optical free-space or fibre-optics channel. In this protocol, the number of transmitted bits is no larger than the number of pulses recorded in the receiver. Typically, the transmitting party transmits vertically/horizontally or diagonally/antidiagonally polarised photons, within each of these pairs associating one of the polarisations with a bit value of 1, with 0 for the other one. The receiving party in turn prepares their measurement system to receive one or the other pair of polarisations for each photon, and reconstructs the key based on measurement results, as well as additional, public information received from the transmitting party.
(ii) the Ekert Protocol (the E91 protocol) is based on the detection of polarisation-entangled photon pairs. In this protocol, a random sequence of bits (key) is created based on measurement of the state of polarisation of a photon pair, due to which the role of the transmitting party is unnecessary, and they take on the role of a second receiving party. The pairs of entangled photons are created by a trusted source of photons, independent from the receiving parties. The photons generated within one pair are subsequently spatially separated and the first and the second photon are directed towards the first and the second receiving party, respectively [Artur K. Ekert "Quantum cryptography based on Bell's theorem" Phys. Rev. Lett. 67, 661, 1991]**.** The E91 protocol uses the property of entanglement of photon pairs. Because of polarisation entanglement, although the polarisation of each of the photons measured separately is completely random, within each pair it is perfectly correlated with the polarisation of the second photon in the pair. This means that the use of photon pairs in a proper entangled state can cause a situation, in which both receiving parties measuring the polarisation of their photons will obtain identical measurement results with a 100% probability. For properly selected entangled states, the sequence of bits being in the possession of both receiving parties, created based on the results, is completely random. In the E91 protocol, no more than *n* bits of the key are generated per each *n* photon pairs. In addition, in the E91 protocol, the presence of a possible eavesdropper is verified by performing the Bell inequality test, since each attempt at eavesdropping the signal modifies the quantum state of the photons, weakening correlations between them.
(iii) the SARG04 protocol described in the paper [Valerio Scarani, Antonio Acín, Grégoire Ribordy, Nicolas Gisin "Quantum Cryptography Protocols Robust against Photon Number Splitting Attacks for Weak Laser Pulse Implementations". Phys. Rev. Lett. 92, 057901, 2004] is based on the orthogonality of photon polarisation states. It has been developed in order to increase the safety of cryptography in case of an attack involving the measurement of excess photons (*photon number splitting attack*)*.* In the SARG04 protocol, the transmitting party selects a pair of polarisations, which they will use to code the key bit with a value of zero and one, these polarisations not being orthogonal. A sample set of pairs is {horizontal - 0, diagonal - 1}, {horizontal - 0, antidiagonal - 1}, {vertical - 0, diagonal - 1}, {vertical - 0, antidiagonal - 1}. When the receiving party records the state orthogonal to one of the states from the declared pair, they are absolutely certain that the transmitting party has transmitted the other state from the declared pair. For example, when the transmitting party has declared that they have encoded a bit in the {horizontal, diagonal} pair of polarisations, while the receiving party has measured the pulse in the vertical polarisation, they are absolutely certain that the transmitting party has transmitted bit 1 associated with diagonal polarisation. In the SARG04 protocol, the selection of the measurement basis in the receiver is entirely random. If no pulse has been recorded, or when the pulse has been measured in a state which is not orthogonal to one of the states of the declared pair, the measurement is rejected as inconclusive, and it is not taken under consideration when generating the key.

In all schemes presented above, in order to ultimately generate a shared key, the transmitting party and the receiving party, or both receiving parties, must be able to transmit classical information to each other. However, possible eavesdropping of this information has no negative impact on the safety of protocols.

An exemplary implementation of a complete method of quantum key distribution based on the BB84 protocol is presented in American patent document [US20110126011A1]. It describes in details all elements of the distribution procedure, from transmitting and measuring the quantum states, disclosing the measurement bases, measuring the qubit error rate, to the so-called privacy amplification enabling reduction of information about the key for a potential unauthorised receiving party (eavesdropper) to zero in spite of technical imperfections of the optical setup. In addition, the patent document discloses a method of authentication of participants in the protocol, i.e. mutual verification of the identity of the receiving party and the transmitting party.

The earlier patent document [US20080101612A1] presented another variant of quantum key distribution, which, apart from a general idea , showed the details of an electro-optical system implementing the protocol. The version described in document is inspired by the BB84 and SARG04 protocols. Attenuated laser pulses used commonly in cryptography are not ideal sources of single photons, since the distribution of the number of photons in each of the pulses is determined by the Poisson distribution. The inventors have focused on solving this technical problem by suggesting a protocol more resistant to forms of eavesdropping involving the interception and measurement of excess photons (*photon number splitting attack*)*.*

Most patent documents related to quantum cryptography do not refer to complete setup for its implementation, but rather to its individual components. Methods for constructing the individual elements of electro-optical systems implementing the protocol are known from prior art. For example, European patent document [EP3503461A1] presents a device for temporal synchronisation of optical signals between a transmitting party and a receiving party. Another European patent document [EP2940923B1] presents a random number generator based on inherently random phenomena defined by the laws of quantum optics. Such generators are the necessary elements of each of the systems implementing the BB84 protocol, used to select the polarisation transmitted in the transmitter, and to select the pair of polarisations measured by the receiving party. Patent document [WO2019206542A1] in turn proposed a receiver for quantum cryptography, which during its operation takes into account potential interruptions in signal detection related to the so-called dead time of avalanche photodiodes. The dead time is a temporary inability of the detector to detect light occurring directly after recording a photon, resulting, e.g. from the time necessary to restore potential difference on the avalanche photo-diode to a level allowing photodetection.

In prior art, there is known a receiver [WO2019087029A1] meant for public communication using very weak light pulses, which comprises an input, optical elements and a detector, and is characterised in that it comprises at least one module comprising at least one polarisation splitting element, an element introducing the difference of optical paths for each of the split polarisations, and a plate rotating the polarisation. The object of the invention is also a setup for transmitting information using very weak light pulses, comprising a transmitter and a receiver, characterised in that the receiver comprises at least one module which comprises at least one polarisation splitting element, an element with a different optical path length for each of the split polarisations, and a half-wave plate rotating the polarisation (HWP). The object of the invention is also a method for transmitting information using very weak light pulses, characterised in that a light pulse having at least two different polarisations splits in the receiver into at least two optical signals with different polarisations; subsequently, the signal with one of the split polarisations is delayed with respect to the optical signal with a second polarisation, upon which the signals are merged and undergo amplification due to interference, and subsequently they are recorded in a detector.

From prior art, there is also known a method of quantum cryptography, in which a cryptographic key is generated based on the detection time of the received photons [Tian Zhong et al. "Photon-efficient quantum key distribution using time-energy entanglement" with high-dimensional encoding, New J. Phys. 17, 022002, 2015]. This scheme does not allow for individual detection of the individual qubits coded in the transmitted signal, and thus prevents the implementation of standard protocols of the BB84 or E91 types. For this reason, its safety can only be verified by means of Franson interferometry, and standard safety proofs for the quantum key distribution based on the transmission of qubits do not apply. For example, standard proofs are described in the review papers [(i) G. van Assche, "Quantum Cryptography and Secret-Key Distillation", 2006, Cambridge University Press; (ii) V. Scarani et al. "The security of practical quantum key distribution" 81, 1301-1350, 2009**;** (iii) S. Pirandola et al. "Advances in Quantum Cryptography" 2019, arXiv:1906.01645].

There are number of articles that might be considered as relevant prior art, for instance Fumin Wang et al.: "Towards practical high-speed high dimensional quantum key distribution using partial mutual unbiased basis of photon's orbital angular momentum", Arxiv.org, Cornell University Library, arXiv: 1801.06582 (published in 2018), reveals a technique for quantum key distribution employing spatial orbital angular momentum modes. Document teaches about transmitter that uses free-space optical beams in various Laguerre-Gaussian (LG) modes or in various Hermite-Gaussian (HG) modes. As these modes are not conserved during the propagation in the optical fibre, this technique cannot be realized using optical fibre beam. Additionally, it employs the receiver consisting of eight single photon detectors. Moreover optical setup elements such as "Spiral wave plate" or "Spatial light modulator", used in the technique, work only for free-space optical beams and do not have fibre optics counterparts. In the current invention, optical fibre beam is used.

Similar concept was published in 2018 by another authors, Yiyu Zhou et al.: "High-dimensional free-space quantum key distribution using spin, azimuthal, and radial quantum numbers", (arXiv: 1809.09986) DOI:10.1364/OE.27.010383. This is a research paper presenting a technique for quantum key distribution relying on spatial orbital angular momentum modes. The fundamental principles behind the protocol are very similar to the work presented in previous prior art, which has been already discussed above.

Another prior art published by Zeitler Chris et al.: "Super-dense teleportation for space applications", Proceedings of SPIE; [Proceedings of SPIE ISSN0277-786X Volume 10524], SPIE, US, vol. 9239, 15 March 2016, 973912-973912, DOI: 10.1117/12.2218282. This document reveals a technique for optical superdense teleportation. The quantum states to be teleported are tensor products of polarization and temporal eigenstates of a photon pair i.e. |Ht1>, |Vt1>, |Ht2>, |Vt2>. A technique presented in this document uses an entanglement source generating photon pairs which are hyperentangled. The photons have different wavelengths of 1550 nm and 810 nm and after separation by a dichroic mirror are sent to Charles and Bob respectively. Thus the transmitter doesn't generate a 2*^{m}* long pulse sequence which could be modulated in the transmitter and shortened in the receiver.

Another scientific article published in 2018 by Xiao-Min Hu et al.: "Beating the channel capacity limit for superdense coding with entangled ququarts", DOI: 10.1126/SCIADV.AAT9304; describes a technique for quantum superdense coding which is a different protocol than the quantum key distribution (QKD).

Moreover, there are known review articles, for instance Feihu Xu, et al.: "Secure key distribution with realistic devices" Arxiv.org (1903.09051 published in 2019) is a review paper presenting an overview of state-of-the-art quantum key distribution protocols. Using the definitions from the manuscript our protocol can be treated as a novel variant of time-energy type high-dimensional QKD (HD-QKD).

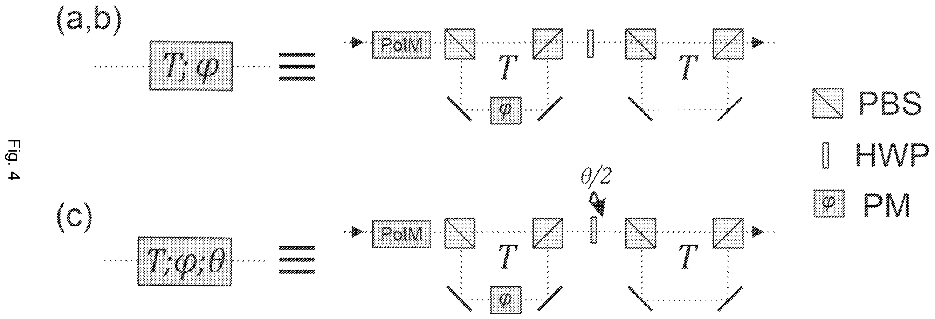

Another review by Manuel Erhard et al.: "Advances in High dimensional Quantum Entanglement", Arxiv.org, (1911.10006, published in 2019) is a review paper presenting a majority of currently existing techniques for quantum key distribution based on photon pairs generation. Our invention belongs to the category of techniques relying on the time-bin approach presented in Figure. 4 of the review paper.

### Problem from the prior art

A typical problem of the existing solutions enabling quantum key distribution is the low generation rate of key bits (*secret key rate*)*.* This rate drops significantly with increasing attenuation of the optical signal in the free-space or fibre-optics channel used to transmit optical pulses. This limits the practical range of key distribution between the transmitting party and the receiving party to approximately 100 km for fibre-optics channels, and to approximately 1000 km for a free-space key distribution by means of a satellite source of entangled photon pairs placed in the low Earth orbit (LEO). The Chinese project MICIUS [S.-K. Liao et al., "Satellite-to-ground quantum key distribution" Nature, 2017, 549, 43-47] is an example of the implementation of quantum satellite communication, in which the BB84 and E91 protocols have both been implemented. Existing protocols of quantum cryptography enabling the generation of multiple bits of the cryptographic key per each recorded photon do not allow the transmission of multiple qubits by means of a single photon, and thus do not guarantee safety analogical to the implementation of quantum cryptographic schemes based on standard protocols of the BB84, E91 or SARG04 type.

### Solution to the problem

The invention described in the document relates to the quantum distribution of a cryptographic key by means of weak optical pulses generated by a laser, or generated by means of a source of entangled photon pairs. In both protocols, the *prepare and measure* type (such as BB84 or SARG04), as well as based on the entanglement of photon pairs (*entangled based*) such as E91, it is possible to transmit more than one key bit per each photon recorded in the receiver, which results in the increase of cryptographic key generation rate even in the presence of high losses in the transmission channel. Thanks to independently encoding multiple qubits in the quantum state of a single photon, as well as using the optical interference in active receivers, the safety of each of the suggested schemes is analogical to BB84, SARG04 or E91 protocols, in which a single photon is able to transmit only a single qubit.

### Detailed description of disclosure

A method for quantum key distribution between a transmitter equipped with a source of optical pulses, in particular very weak optical pulses, and a receiver equipped with a single-photon detector, in which the cryptographic key is transmitted in consecutive qubits by means of a transmitter, wherein for each sequence of m qubits
a) the transmitter transmits a sequence of 2*^{m}* optical pulses, which are subjected to multi-state modulation, mapping the bits of the cryptographic key into the states of qubits according to a modulation bases selected randomly from a set of at least two bases;
b) the receiver receives the sequence of 2*^{m}* optical pulses, which are subjected to multi-state demodulation, mapping the states of qubits into the bits of the cryptographic key according to a demodulation bases selected randomly from said set of at least two bases, while;
   c1) *m* identifiers of the used demodulation bases are transmitted from the receiver to the transmitter by means of a classical communication channel, while *m* identifiers of the used modulation bases are transmitted from the transmitter to the receiver by means of a classical communication channel, and the results of the measurements of the time of arrival of optical pulses, for which the transmitting party and the receiving party selected identical basis, are used to generate a secret cryptographic key;
      or
   c2) information about which pair of qubit states was used to encode the logical bit 0 and the logical bit 1, respectively, is transmitted from the transmitter to the receiver by means of a classical communication channel, and information about when a qubit state orthogonal to any of the states listed in the pair was detected in the receiver is transmitted from the receiver to the transmitter, while the cryptographic key is generated based on the measurements of the time of arrival of optical pulses, for which a qubit state orthogonal to any of the states listed in the pair was detected in the receiver;
      or
   c3) *m* identifiers of the used demodulation bases are transmitted between the receivers via a classical channel, and the cryptographic key is created based on the measurements of the time of arrival of optical pulses, for which identical demodulation basis was selected in each of the receivers;

according to the invention is characterised in that
multi-state modulation is a modulation of the phase and/or amplitude of optical pulses, in which, for the first one of *m* bits of the cryptographic key, the sequence of 2*^{m}* optical pulses is divided into two subsequences comprising an equal number of 2*^{m-1}* optical pulses, wherein the phase and/or amplitude of both subsequences are being determined based on the bit value of the cryptographic key and the selected modulation basis, and the operation is subsequently repeated for consecutive *m*-1 bits of the cryptographic key, each time subjecting to modulation twice shorter subsequences respectively,
while demodulation is performed in a multi-stage setup with the number of stages corresponding to the number of qubits *m,* in which, at each stage, the sequence of 2*^{m}* pulses is divided into two equal subsequences of 2*^{m-1}* optical pulses each; the first subsequence is temporally delayed in order to synchronise it with the second subsequence, the phase of pulses in one of the subsequence is shifted by a value determined by the selected demodulation basis, and the subsequences are subsequently interfered, so that a single optical pulse measured in one of 2*^{m}* temporal positions is produced after the last stage of the setup, wherein the bits of the cryptographic key are being generated based on this position.

In the version implementing the protocol analogous to BB84, the method for quantum key distribution uses pulses of laser light, in particular very weak pulses of laser light, as optical pulses, and moreover uses a transmitter and a receiver connected to each other via a classical communication channel and a quantum communication channel, is characterised in that the phase of pulses of laser light transmitted from the transmitter is determined according to the following algorithm:
(i) the pulses whose position *k* fulfils the inequality *k mod* 2*^{m}* ≥ 2*^{m-1}* are modulated with the phase ϕ*ₘ₋₁*, where *mod* means the modulo operation;
(ii) the pulses whose position *k* fulfils the inequality *k mod* 2*^{m-1}* ≥ 2^{*m-*2} are additionally modulated with the phase ϕ*ₘ₋₂*;
(iii) the pulses whose position *k* fulfils the inequality *k mod* 2*^{m-2}* ≥ 2^{*m-*3} are additionally modulated with the phase ϕ*ₘ₋₃*;
(iv) the procedure continues until the last step, in which the pulses whose position fulfils the inequality *k mod* 2 ≥ 1 are additionally modulated with the phase ϕ*₀*;
wherein the values of phases in the set (ϕ*ₘ₋₁* ϕ_{*m*-2}*.*..ϕ*₁*ϕ*₀*) encoding the values of *m* logical bits are for example 0,π,π/2,3π/2.

In the version implementing the protocol analogous to SARG04, the method for quantum key distribution uses pulses of laser light, in particular very weak pulses of laser light, as optical pulses, and moreover uses a transmitter and a receiver connected to each other via a classical communication channel and a quantum communication channel, is characterised in that the complex amplitude of pulses of laser light transmitted from the transmitter is determined according to the following algorithm:
(i) the pulses whose position *k* fulfils the inequality *k mod* 2*^{m}* < 2*^{m-1}* are modulated with the complex amplitude α*ₘ₋₁* where *mod* means the modulo operation;
(ii) the pulses whose position *k* fulfils the inequality *k mod* 2*^{m}* ≥ 2*^{m-1}* are modulated with the complex amplitude β*ₘ₋₁* , where *mod* means the modulo operation;
(iii) the pulses whose position *k* fulfils the inequality *k mod* 2*^{m-1}* < 2^{*m*-*2*} are additionally modulated with the complex amplitude α_{*m*-*2*};
(iv) the pulses whose position *k* fulfils the inequality *k mod* 2*^{m-1}* ≥ 2*^{m-2}* are additionally modulated with the complex amplitude β*ₘ₋₂*;
(v) the pulses whose position *k* fulfils the inequality *k mod* 2*^{m-2}* < *2^{m-3}* are additionally modulated with the complex amplitude *αₘ₋₃*;
(vi) the pulses whose position *k* fulfils the inequality *k mod* 2^{*m*-*2*} ≥ *2^{m-3}* are additionally modulated with the complex amplitude β*ₘ₋₃*,
(vii) the procedure continues until the last step, in which the pulses whose position fulfils the inequality *k mod* 2 < 1 are additionally modulated with the complex amplitude α*₀*, while the pulses whose position fulfils the inequality *k mod* 2 ≥ 1 are additionally modulated with the complex amplitude β*₀*;
wherein the values of complex amplitudes pairs in the set (α*_{m-1,}* β*_{m-1,}* α*_{m-2,}* β_{*m-2*,...,} α*_{1,}* β_{*1*,} α*₀*, β*₀*) defining *m* states of the transmitted qubits equal for example (α*ᵢ*=0, β*ᵢ* = 1), (α*ᵢ* =1, β*ᵢ*= 0), (α*ᵢ*=1/√2, β*ᵢ*= 1√2),(α*ᵢ*=1√2, β*ᵢ*= -1√2).

In the version implementing the protocol analogous to E91, the method for quantum key distribution uses entangled photon pairs as optical pulses, in particular very weak optical pulses, and moreover a source of entangled photon pairs is used as a transmitter, and the cryptographic key is generated between two receivers equipped with a detector of optical pulses in the form of a single-photon detector, in which, based on the measurements of the arrival time of the photon performed for photons incoming from the transmitter in a superposition of 2*^{m}* pulses each the consecutive bits of the cryptographic key are generated, while each measured photon pair enables the generation of *m* bits of the cryptographic key, and, by means of receivers, the pairs of entangled photons are received in a superposition of 2*^{m}* pulses each, for which the measurement of the arrival time of the photon is performed, according to a basis selected randomly from a set of three bases, generating bits of the cryptographic key based on the measurement results of the arrival time of the photon, while information on the *m* identifiers of the used measurement bases is exchanged between the receivers by means of a classical communication channel,

Is characterised in that
the measurement of the arrival time of the photons, being in the superposition of 2*^{m}* pulses each, is performed in a multi-stage setup with the number of stages *m,* in which, at each stage, the sequence of pulses is divided into two equal subsequences; the first subsequence is temporally delayed in order to synchronise it with the second subsequence, the phase of pulses in one of the subsequences is shifted by the value determined by the measurement basis, and the subsequences are subsequently interfered, so that a single pulse with an energy of at most one photon measured in one of the 2*^{m}* temporal positions is produced after the last stage, wherein the bits of the cryptographic key are being generated based on this position.

The invention comprises also a method for transmitting modulated optical pulses dedicated to quantum key distribution, which uses a transmitter equipped with a source of pulses of laser light, in particular very weak pulses of laser light, connected with an optical phase modulator via optical fibre, the cryptographic key is transmitted in the consecutive qubits by means of a transmitter, wherein, for each sequence of *m* qubits, the transmitter transmits a sequence of 2*^{m}* pulses of laser light, which are subjected to multi-state modulation, mapping the bits of the cryptographic key into the states of qubits according to the modulation bases selected randomly from a set of at least two bases,
characterised in that
multi-state modulation is a modulation of the phase of pulses of laser light, in which, for the first one of *m* bits of the cryptographic key, a sequence of 2*^{m}* pulses of laser light is divided into two subsequences comprising an equal number of 2*^{m-1}* optical pulses, wherein the phase of both subsequences is being determined based on the bit value of the cryptographic key and the selected modulation basis, and the operation is subsequently repeated for consecutive *m*-1 bits, each time separately subjecting to modulation twice shorter subsequences respectively.

The invention comprises also a method for transmitting modulated optical pulses dedicated to quantum key distribution, which uses a transmitter equipped with a source of pulses of laser light, in particular very weak pulses of laser light, connected to a quadrature modulator *IQ* with an optical fibre, the cryptographic key is transmitted in the consecutive qubits by means of a transmitter, wherein, for each sequence of *m* qubits, the transmitter transmits a sequence of 2*^{m}* pulses of laser light, which are subjected to multi-state modulation, mapping the bits of the cryptographic key into the states of qubits according to the modulation bases selected randomly from a set of at least two bases,
characterised in that multi-state modulation is a modulation of the complex amplitude of pulses of laser light, in which, for the first one of *m* bits of the cryptographic key, a sequence of 2*^{m}* pulses of laser light is divided into two subsequences comprising an equal number of 2*^{m-1}* optical pulses, wherein the complex amplitude of both subsequences is being determined based on the bit value of the cryptographic key and the selected modulation basis, and the operation is subsequently repeated for consecutive *m*-1 bits, each time subjecting to modulation twice shorter subsequences respectively.

The invention comprises also a method for receiving optical pulses, dedicated to quantum key distribution, which uses pulses of laser light, in particular very weak pulses of laser light, as optical pulses, and moreover uses a receiver equipped with a single-photon detector, in which the receiver receives a sequence of 2*^{m}* pulses of laser light, which are subjected to multi-state demodulation, mapping *m* states of qubits into *m* bits of the cryptographic key according to a demodulation bases selected randomly among said set of at least two bases,
characterised in that
demodulation is performed in a multi-stage setup, with the number of stages corresponding to the number of qubits *m,* in which, at each stage, the sequence of 2*^{m}* pulses of laser light is divided into two equal subsequences of 2*^{m-1}* pulses, the first subsequence is temporally delayed in order to synchronise it with the second subsequence, the phase of pulses in one of the subsequences is shifted by a value according to the selected demodulation basis, and the subsequences are subsequently interfered, so that a single pulse of laser light measured in one of 2*^{m}* temporal positions is produced after the last stage of the setup, wherein the bits of the cryptographic key are being generated based on this position.

Preferably, in addition, after subsequences interference, the polarisation of all pulses is rotated by the angle *θ* determined separately for each of the stages of the setup.

The invention comprises also a method for receiving optical pulses, dedicated to quantum key distribution, which uses entangled photon pairs as optical pulses, in particular very weak optical pulses, and moreover uses a pair of receivers equipped with a single-photon detector, in which, based on measurements of the arrival time of the photon performed for photons recorded in the receiver in the superposition of 2*^{m}* light pulses each, the consecutive bits of the cryptographic key are generated, wherein a source of entangled photon pairs is used as the transmitter, while each measured pair of photons enables the generation of *m* bits of the cryptographic key, and the receivers receive the entangled photon pairs in the superposition of 2*^{m}* optical pulses each, for which the measurement of the arrival time of the photon to the receiver is performed according to a basis selected randomly from a set of at least two bases, generating the bits of the cryptographic key based on the measurement results of the arrival time of the photon to the receiver, while information on the *m* identifiers of the used measurement bases is exchanged between the receivers by means of a classical communication channel,
characterised in that
the measurement of the arrival time of the photons to the receiver, being in the superposition of 2*^{m}* optical pulses each, is performed in a multi-stage setup with the number of stages *m,* in which, at each stage, the sequence of pulses is divided into two equal subsequences of 2*^{m-1}* pulses, the first subsequence is temporally delayed in order to synchronise it with the second subsequence, the phase of pulses in one of the subsequences is shifted by the value determined by the measurement basis, and the subsequences are subsequently interfered, so that a single pulse with an energy of at most one photon measured in one of the 2*^{m}* temporal positions is produced after the last stage, wherein the bits of the cryptographic key are being generated based on this position.

Preferably, it uses optical signals of a wavelength within a range of 600-1700 nm, in particular 700-900 nm or 1100-1600 nm.

The invention comprises also a receiver of optical pulses, in particular very weak optical pulses, in particular in the form of very weak pulses of laser light or in the form of single photons, dedicated to the quantum key distribution, comprising an input, optical elements and a detector, which comprises at least one module (*T*, ϕ) or (*T*, ϕ, *θ*), wherein module comprises at least one polarisation splitting element, an element introducing the difference of optical paths for each of the split polarisations, and at least one waveplate rotating the polarisation (HWP, QWP), with a fixed or adjustable angle of polarisation rotation *θ*, and in which a part of the optical signal propagates in a shorter path and a part of the optical signal propagates in a longer path,
characterised in that
the module (*T,* ϕ) or (*T,* ϕ, *θ*) comprises at least one polarisation modulator (PolM), the element splitting the polarisations is a polarisation-splitting cube (PBS) placed after a polarisation modulator (PolM), the element introducing the difference of optical paths for each of the split polarisations is placed between two polarisation-splitting cubes (PBS), and in addition an element introducing the phase shift "ϕ" is placed in at least one of the optical paths,
wherein said elements are distributed and configured to perform demodulation in a multi-stage setup, with the number of stages corresponding to the number of qubits *m,* in which, at each stage, the sequence of 2*^{m}* optical pulses is divided into two equal subsequences of 2*^{m-1}* optical pulses, the first subsequence is temporally delayed in order to synchronise it with the second subsequence, the phase of pulses in one of the subsequences is shifted by a value determined by the selected demodulation basis, and the subsequences are subsequently interfered, so that a single pulse of laser light measured in one of 2*^{m}* temporal positions is produced after the last stage of the setup, wherein the bits of the cryptographic key are being generated based on this position.

Preferably, it comprises at least two modules (T, ϕ) or at least two modules (T, ϕ, θ), wherein, in the first such module, the optical path intended for a part of the optical signal is shorter, and the optical path intended for the remaining part of the optical signal is longer, while, in each consecutive module, the longer optical path is two times shorter than the longer optical path in the module directly preceding it.

Preferably, it is equipped with a single-photon detector for detecting the optical pulses, placed at the output of the receiver setup.

Preferably, the element introducing the difference of optical paths for each of the split polarisations is an optical fibre and/or free-space optical path.

Preferably, the element introducing the phase shift "ϕ" is placed in the longer or shorter optical path, between two polarisation-splitting cubes (PBS) (dedicated for each of the split polarisations).

Preferably it comprises a correction system, which increases the acceptance angle of the input signal.

Preferably, the correction system is a dielectric block or a linear optics system, in particular a 4*f* system.

### Advantages of the invention

Compared to the existing protocols, the described invention allows for a more efficient use of the optical energy in quantum distribution of the cryptographic key, as well as for an increase in the key generation rate and simpler verification of the protocol safety.

### Description of the drawings

The object of the invention is explained in embodiments in the drawings, where:

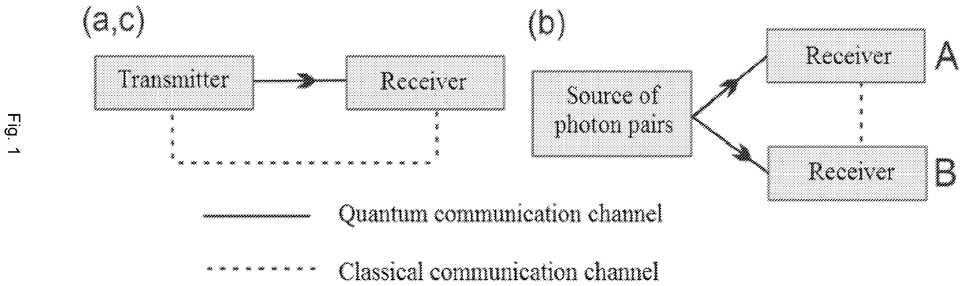

Fig. 1. presents the structure of a setup for quantum cryptography known from prior art, implementing: (a, c) the BB84 or SARG04 type protocol, and (b) the E91 type protocol. The classical communication channel is used to transmit information about the measurement bases of qubits and, at a later stage, to transmit encrypted information. The quantum information channel is used to transmit qubits.

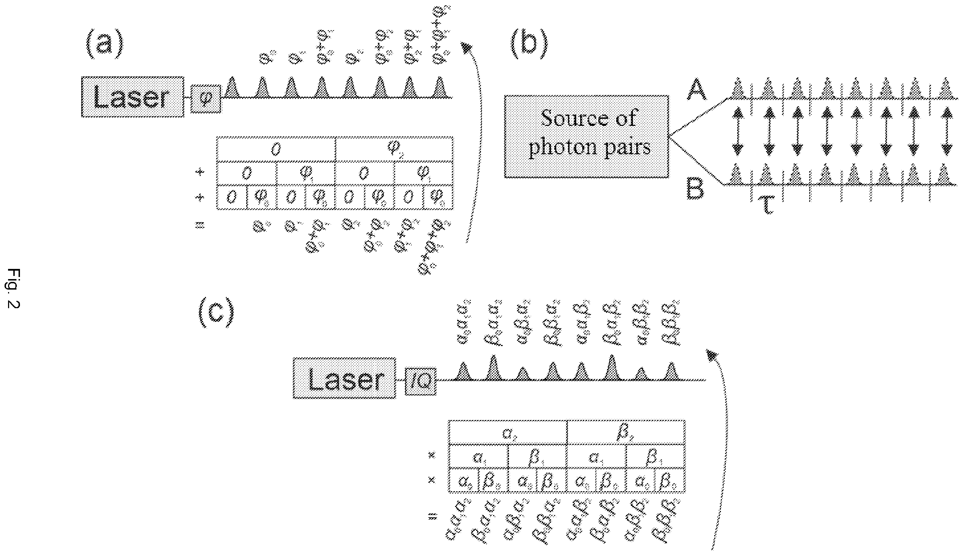

Fig. 2 presents in part (a) the structure of a transmitter dedicated to BB84 type protocols, along with the algorithm for imprinting phase shifts on the individual pulses in the optical signal for a sequence of pulses with a length of 2*^{m}*, where *m* = 3. In part (b), it presents a source of temporally entangled pairs of photons. Each of the photons from the pair directed to receivers A and B, respectively, is generated in the quantum superposition of 2*^{m}* optical pulses, which has been presented for *m* = 3. In part (c), it presents the structure of a transmitter dedicated to SARG04 type protocols, along with the algorithm for selecting complex amplitudes for a sequence of pulses with a length of *2^{m},* where *m* = 3.

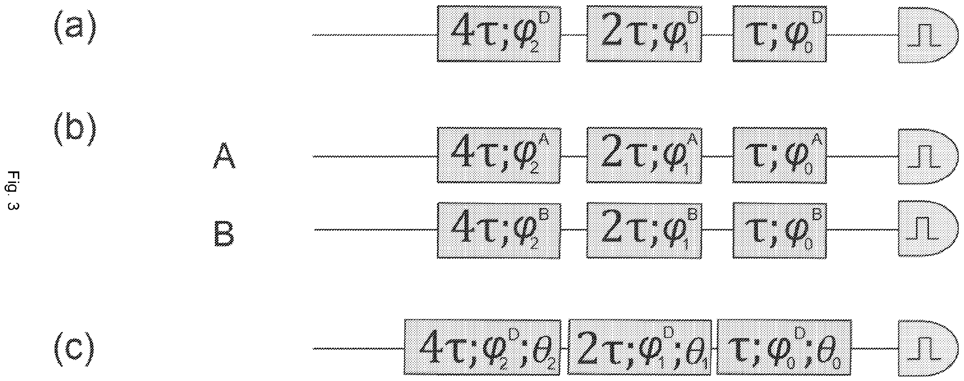

Fig. 3 presents the structure of receivers consisting of *m* active modules: in part (a) it presents a receiver dedicated to the BB84 type protocol. In part (b) it presents a pair of receivers necessary to implement the E91 type protocol. In part (c) it presents a receiver dedicated to the SARG04 type protocol.
Fig. 4 presents detailed schemes of each of the *m* modules, of which the receiver consists. In part (a, b), it presents a module dedicated to the detection of a protocol of the BB84 or E91 type, described by the pair of parameters "*T*, ϕ" defining the introduced delay T and the phase-shift ϕ, which is imprinted on some of the pulses. In part (c), it presents a module dedicated to the detection of a protocol of the SARG04 type, described by three parameters "*T*, ϕ, *θ*" defining the introduced delay T, the phase-shift ϕ, which is imprinted on some of the pulses, and the angle of polarisation rotation *θ*.

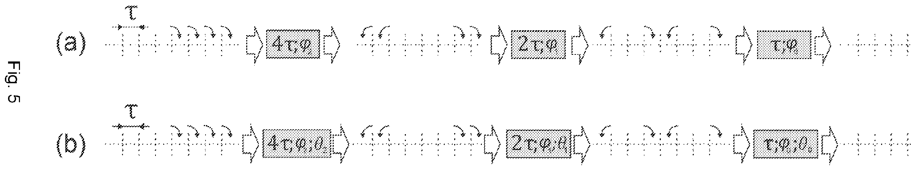

Fig. 5 presents a scheme of polarisation rotations for individual pulses in a sequence with a length of 2*^{m}* = 8, where *m* = 3. Curved arrows show the direction of rotation for polarisations of the individual fragments of the signal by an angle of 90 degrees, implemented by polarisation modulators in individual modules. This scheme is the same both for modules dedicated to the detection of a protocol of the BB84 or E91 type (a), as well as for modules dedicated to the detection of a protocol of the SARG04 type (b).

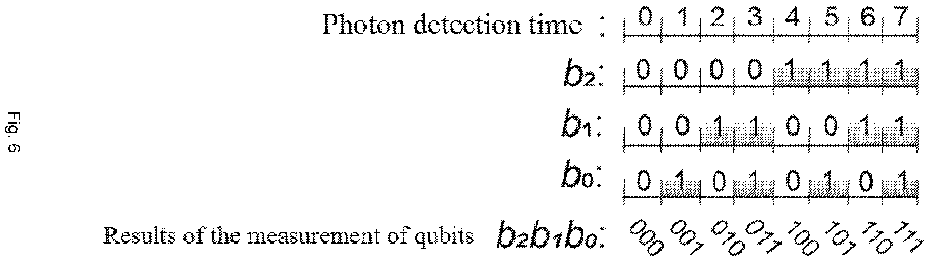

Fig. 6 presents the method for generating key bits based on the detection time of the photon or optical pulse, used in all protocols BB84, E91 and SARG04.

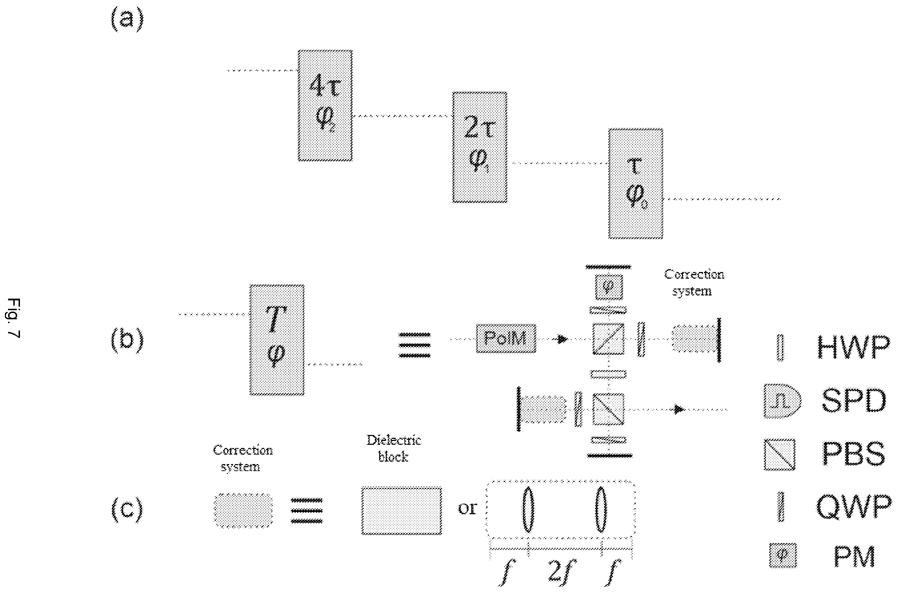

Fig. 7 presents an alternative way of implementation of the receiver consisting of modules dedicated to detect type BB84 or E91 protocols, comprising a correction subsystem, increasing the acceptance angle of the signal.

In the described invention, the used terms have meanings defined below. The terms which are not defined in the document have the meaning understood by a person skilled in the art in the light of the best knowledge, the present disclosure and the context of the patent application description.

The term "transmitter basis" means characteristic pairs of qubit phases transmitted by the transmitter.

The term "measurement basis" means characteristic phases with which selected optical pulses are modulated in the individual modules of the receiver.

The term "BB84" means a quantum key distribution protocol described in the paper [Bennett, Charles H., Brassard, Gilles. Quantum Cryptography: Public key distribution and coin tossing. "Proceedings of the IEEE International Conference on Computers, Systems, and Signal Processing, Bangalore", 1984, p. 175], in which a transmitting party transmits a sequence of qubits, whose states correspond to the sequence of bits in their possession, while a receiving party performs the measurements of the individual qubits in two measurement bases. The cryptographic key is created after the receiving party's disclosure of bases, in which measurements have been performed, and information on which of the measurement results the receiving party should keep.

The term "E91" means a quantum key distribution protocol described in the paper [Artur K. Ekert "Quantum cryptography based on Bell's theorem" Phys. Rev. Lett. 67, 661, 1991], in which the key is generated using the measurements of polarisation of polarisation-entangled photon pairs, as well as public disclosure of measurement bases, while safety is provided by Bell's inequality test.

The term "SARG04" means a quantum key distribution protocol described in the paper [Valerio Scarani, Antonio Acín, Grégoire Ribordy, Nicolas Gisin "Quantum Cryptography Protocols Robust against Photon Number Splitting Attacks for Weak Laser Pulse Implementations". Phys. Rev. Lett. 92, 057901, 2004**],** based on the orthogonality of photon polarisation states.

The term "HWP" means a half-wave plate rotating polarisation by 45°, unless stated otherwise.

The term "qubit" means the smallest and indivisible unit of quantum information.

The term "basis state of a qubit" means one of two basis states of a two-dimensional Hilbert space forming the qubit.

The term "complex amplitude" means a complex number, describing jointly the amplitude and the phase of the electric field at the same.

The term "mode" (as in *electromagnetic radiation mode*) means any distribution of electromagnetic radiation in time or space.

The term "QCI" means quantum communication infrastructure .

The term "QKD" means quantum key distribution .

The term "QWP" means a quarter-wave plate, upon passing through which the light can change its polarisation.

The term "PBS" means polarisation splitting cubes (an abbreviation of *Polarisation* Beam *Splitter*)*.*

The term "PM" (*Phase Modulator*) means an electro-optic light phase modulator, which modifies the light phase due to the impact of applied voltage.

The term "RSA" in cryptography means the Rivest-Shamir-Adleman algorithm, named after its creators, one of the first and currently most popular asymmetric cryptographic algorithms with a public key, designed in 1977 by Ron Rivest, Adi Shamir and Leonard Adleman. The first algorithm which can be used both for encryption and for digital signatures. The safety of encryption is based on the difficulty of factorisation of large composite numbers.

The term "SPD" means a single-photon detector, enabling the detection of an optical pulse at the output of a receiver setup with high temporal resolution reaching hundreds of picoseconds. One example of the SPD is an avalanche photo-diode.

The term "entangled state" means a type of a correlated quantum state of two or more quantum systems (*quantum entanglement*)*.* It has a feature unique to quantum physics, according to which the state of the entire setup cannot be described by specifying the states of its partial subsystems.

The term "superposition" means the property of a photon, enabling it to be in multiple temporal modes at the same time.

For the needs of the present invention, the term "optical pulse" (or short: "pulse"), as well as "optical signal" (or short: "signal") means a pulse or pulses of laser light, an entangled photon pair, or a single photon, or a temporal mode of a single photon.

For the needs of the present invention, the term "very weak optical signals" or "very weak optical pulses" means single photons, photon pairs or pulses of laser light ("very weak pulses of laser light"), whose average number of received photons measured within the time interval τ is considerably smaller than 1. For example, for τ = 100 ps, it means that signal power must be lower than 1.3 nWfor a wavelength of 1550 nm, or 2.5 nW for a wavelength of 800 nm.

The term "source of weakened optical signals/pulses" means a femtosecond oscillator, or a continuous wave (CW) laser modulated with an amplitude modulator, where the source emits the pulses of single photons in time intervals within a range of 10-500 ps, in particular 50-100 ps, where these pulses have a wavelength for fibre-optic transmission within a range of 1100-1700 nm, in particular 1250-1350 nm or 1500-1600 nm, or, for free-space transmission, a wavelength within a range of 700-1000 nm, in particular 800-850 nm.

### Embodiments of the invention

The following embodiments are presented only in order to illustrate the invention and explain its individual aspects, and not for its limitation, and they should not be associated with its entire scope which is defined in the appended claims.

### Embodiment 1.

### A setup for quantum key distribution by means of a transmitter and a receiver, dedicated to protocols of the prepare and measure type, such as BB84

In this embodiment, the optical signals have the form of pulses of laser light, in particular very weak pulses of laser light.

A transmitter dedicated to BB84-type protocols consists of a source of weakened laser pulses and an optical phase modulator (e.g. an electro-optic fibre-optic modulator - PM). The laser pulses can originate from a femtosecond oscillator, or from a continuous wave (CW) laser modulated with an amplitude modulator.

Due to the wide availability of optical elements, the wavelength of laser light should be selected from wavelength range of (600 - 1700 nm), or from the range of one of fibre-optic transmission windows (1250 - 1350 nm, 1500 - 1600 nm), or from the free-space transmission window (800 - 850 nm). The bandwidth of the phase modulator reaches several dozen GHz, while the average number of photons in each pulse is considerably lower than one. The temporal distance between consecutive pulses ranges from 20 to 500 ps (picoseconds).

A receiver dedicated to the BB84 protocol, or other protocols of the *prepare and measure* type, comprises an input, optical elements, and a single-photon detector (SPD). In particular, it also comprises at least one module introducing a time delay and a phase shift, described by the parameters "*T*, ϕ". Each of the modules comprises at least one polarisation splitting element, an element introducing the difference of optical paths for each of the polarisations, and at least one wave plate rotating the polarisation (HWP, QWP). One part of the optical signal in the receiver propagates in a shorter path, and the other part propagates in a longer path. Both optical paths are realized in an optical fibre or in a free-space. For simplicity, the element "*T*" is called a polarisation delay line, which comprises two different optical paths for each polarisation. The polarisation splitting element can be realised as e.g. a polarisation splitting cube (PBS). The element introducing the difference of optical paths for each polarisation is placed between the PBS cubes. The element introducing a phase shift "ϕ" for a part of the optical signal can be realised as e.g. an electro-optic phase modulator (PM). The phase modulator (PM) is placed in the longer or shorter arm of the element introducing the difference of optical paths for each polarisation. The entire single module described by the parameters "*T*, ϕ" comprises at least one polarisation modulator (PolM).

In a setup for quantum key distribution by means of a transmitter and a receiver (see Fig. 1 (a,c)), a sequence of weakened pulses of laser light with a length of 2*^{m}* is generated in the transmitter, where *m* is a natural number. This transmitter is presented in Fig. 2 (a). The positions of individual pulses are numbered as *k* (where *k* = 0, 1, 2...2*^{m}*-1). By means of such a sequence, the transmitter transmits *m* qubits via proper phase modulation of the individual pulses. The phase of the pulses is determined according to the following algorithm:
1. The pulses whose position *k* fulfils the inequality *k mod* 2*^{m}* ≥ 2*^{m-1}* are modulated with the phase ϕ*ₘ₋₁* , where *mod* means the modulo operation.
2. The pulses whose position *k* fulfils the inequality *k mod* 2*^{m-1}* ≥ 2^{*m*-2} are **additionally** modulated with the phase ϕ*ₘ₋₂*
3. The pulses whose position *k* fulfils the inequality *k mod* 2^{*m*-2} ≥ *2^{m-3}* are **additionally** modulated with the phase ϕ*ₘ₋₃*
4. The procedure continues until the last step, in which the pulses whose position fulfils the inequality *k mod* 2 ≥ 1 are **additionally** modulated with the phase ϕ*₀*

The procedure presented above for *m* = *3* is illustrated in Fig. 2 (a). The states of individual qubits are defined by a set of phase values (ϕ_{*m-1*,}ϕ_{*m-2*,....,}ϕ_{*2*,}ϕ_{*1*,}ϕ₀)*.* In order to eliminate the danger of damaging the modulator, the total phase, with which the individual pulses are modulated, can be decreased by an integer multiple of 2π. Generally, the transmitter is capable of transmitting qubits in any quantum state being an equal superposition of basis states. A specific case of using the transmitter is the implementation of the BB84 protocol, in which the transmitter transmits qubits with phases of 0, π or π/2, 3π/2, being the equivalents of a horizontal/vertical or diagonal/antidiagonal polarisation pair. The pair of phases selected by the transmitting party is called the transmission basis. Both the selection of the transmission basis and the selection of the precise phase value are implemented in a completely random manner, e.g. by means of a quantum random number generator (e.g.: IDQuantique - Quantis Random Number Generator). The sequence of pulses prepared in such a manner is transmitted to the receiver via a fibre-optics or free-space transmission channel.

For a sequence with a length of *2^{m}*, the receiver presented in Fig. 3 (a) comprises *m* modules connected in sequence, with a decreasing temporal delay 2^{*m*-1}**τ**,...,2**τ**,1**τ**, where **τ** is the inverse of the pulse generation frequency. Inside the receiver, the individual pulses of the weakened light interfere constructively, in such a manner that, at the output of the receiver, the entire optical energy carried by a pulse sequence is concentrated in a single pulse. An exemplary scheme of the receiver for which *m* = 3 is presented in Fig. 3 (a), while the scheme of module components is presented in Fig. 4(a). The first element of each of the modules is a polarisation modulator (PoIM), which, regardless of the input sequence, rotates the polarisation of selected pulses by +90° or -90° according to the direction of arrows, in front of each of the modules presented in Fig. 5(a). Subsequently, pulses polarised horizontally are delayed with respect to pulses polarised vertically by a time delay "*T*" characteristic for each module. In addition, these pulses are modulated with a phase "ϕ" by means of an electro-optic modulator (PM). By coherently interfering, the pulses are polarised diagonally or antidiagonally when leaving the polarisation delay line. Subsequently, diagonal polarisations are changed into linear polarisations using a half-wave plate HWP. In an ideal case, when the receiving party's measurement basis corresponds to the one selected by the transmitting party to prepare the qubit state, the sequence of optical pulses is shortened twice after interference. At the end of each of the modules, there is a second polarisation delay line, introducing a delay of "T" for horizontal polarisation. With a proper setting of phases in electro-optic modulators, after passing through *m* modules, the entire energy carried by a sequence of 2*^{m}* optical pulses is cumulated in a single pulse, which, due to its high power, can be easily recorded, e.g. by means of an avalanche photo-diode SPD. The number of modules necessary to convert a sequence of pulses into a single pulse scales logarithmically with the length of the sequence.

The temporal position of the output pulse depends on phase relations between pulses in the sequence, and it is dependent on the set (ϕ_{*m-1*,}ϕ_{*m-2*,....,}ϕ_{*2*,}ϕ_{*1*,}ϕ₀), based on which the individual pulses are phase-modulated in the transmitter, and on the set (ϕ^{D}_{*m-1*,}ϕ^{D}_{*m-2*,....,}ϕ^{D}_{2,}ϕ^{D}_{1,}ϕ^{D}₀) of phases, which the pulses are phase-modulataed in the receiver. The set of phases (ϕ^{D}_{*m-1*,}ϕ^{D}_{*m-2*,}....,ϕ^{D}_{2,}ϕ^{D}_{*1*,}ϕ^{D}₀) defines the measurement basis of each of the *m* received qubits. In particular, for the BB84 protocol, a phase setting of ϕ^{D}*ᵢ* = 0 is equivalent to measuring qubit i in the vertical/horizontal polarisation basis, while a phase setting of ϕ^{D}*ᵢ* = π/2 is equivalent to measuring qubit *i* in the diagonal/antidiagonal polarisation basis. After performing the measurement of the output pulse, the measured temporal position of the pulse *k* is to be written in the binary system as *k* = b*₀* + b*₁* x 2+ b*₂* x 4 + ... + b*ₘ₋₂* x *2^{m-2}* + b*ₘ₋₁* x 2*^{m-1}.* The sequence of bits b*ₘ₋₁*b*ₘ₋₂...*b*₁*b*₀* generated in this manner corresponds to the temporal position of the measured photon written as the binary number. This position has been measured by means of a single-photon detector SPD and commercially available electronic setups (*time-tagger*)*.* This method is illustrated in Fig. 6 for *m* = 3. The value of bit b*ᵢ* corresponds to the measurement result of qubit *i* in the basis defined by the phase ϕ^{Dᵢ} . Similarly to the BB84 protocol, the measurement results of these qubits, for which the pair of phases selected in the transmitter is consistent with the measurement basis selected in the receiver, are used to generate bits of the secret key. The verification of measurement bases between the receiver and the transmitter is performed with the use of classical communication, the eavesdropping of which has however no negative impact on the safety of protocols. If no pulse has been recorded, such a measurement is rejected as inconclusive, and it is not taken under consideration when generating the key.

### Embodiment 2.

### A setup for quantum key distribution with a source of temporally entangled photon pairs, dedicated to protocols based on entanglement, such as E91

In this embodiment, optical signals, in particular very weak optical signals, have the form of entangled photon pairs.

The setup for quantum key distribution presented in Fig. 1 (b) comprises a source of photons (transmitter), where temporally entangled photon pairs are emitted. The source generates photons in a coherent superposition of 2*^{m}* temporal modes, where *m* is a natural number. The positions of individual superposition modes are numbered by *k* (where *k* = 0, 1, 2...2*^{m}*-1). A source of this type can be based on, for example, non-linear phenomena, in particular on the spontaneous parametric down conversion process. Within each pair, the first of the photons is transmitted to one of the receivers (denoted A), and the second to the other one (denoted B), using optical fibre or free-space channel. This is illustrated for *m* = 3 in Fig. 2 (b). Due to the wide availability of optical elements, the wavelength of the generated photon pairs should be selected from the wavelength range of (600 - 1700 nm), or more narrowly from the range of fibre-optic transmission window (1250 - 1350 nm or 1500 - 1600 nm), or from the free-space transmission window (800 - 850 nm). Thanks to this, the invention described in the present application can be implemented by means of standard telecommunication devices.

Receivers dedicated to the E91 type protocol comprise an input, optical elements and a single-photon detector (SPD). In particular, they also comprise at least one module delaying and introducing a phase shift, described by the parameters "*T*, ϕ". Each of the modules comprises at least one polarisation splitting element, an element introducing the difference of optical paths for each of the polarisations, and at least one wave plate rotating the polarisation (HWP, QWP). One part of the optical signal in the receiver propagates in a shorter, and the other part propagates in a longer optical path, both optical paths are realized in optical fibre or in the free-space. The polarisation splitting element can be realised as e.g. a polarisation splitting cube (PBS). The element introducing the difference of optical paths for each polarisation is placed between the PBS cubes. The element introducing a phase shift "ϕ" for a part of the optical signal can be realised as e.g. an electro-optic phase modulator (PM). The phase modulator is placed in the longer or shorter arm of the element introducing the difference of optical paths for each polarisation. The module "*T*,ϕ" comprises at least one polarisation modulator (PoIM).

For photons in the superposition of 2*^{m}* temporal modes, the receiver presented in Fig. 3 (b) consists of *m* modules connected in sequence, with a decreasing temporal delay 2^{*m*-1}**τ**,... ,2**τ**, 1**τ**, where **τ** is the temporal distance between the consecutive modes of superposition. An exemplary scheme of the receiver for which *m* = 3 is presented in Fig. 3 (b), while the scheme of module components is presented in Fig. 4 (b). Inside each of the receivers, the temporal modes of the photon interfere constructively, in such a manner that, at the output of the receiver, the entire optical energy is concentrated in a single pulse. The first element of each of the modules is a polarisation modulator, which, regardless of the input sequence, rotates the polarisation of selected temporal modes by +90° or -90° according to the direction of arrows, in front of each of the modules presented in Fig. 5(a). Subsequently, temporal modes polarised horizontally are delayed with respect to modes polarised vertically by the time interval "*T*" characteristic for each module. In addition, these modes are modulated with a phase "ϕ" by means of an electro-optic modulator (PM). The number of temporal modes being the components of photon superposition is then reduced twice, while, by coherently interfering with each other, the modes are polarised diagonally or antidiagonally when leaving the polarisation delay line. Subsequently, diagonal polarisations are changed into linear polarisations using a half-wave plate HWP. At the end of each of the modules, there is a second polarisation delay line, introducing a delay of "T" for horizontal polarisation. After passing through *m* modules, the entire energy carried by the photon is cumulated in a single temporal mode, which can be recorded, e.g. by means of an avalanche photo-diode. The number of modules necessary to convert a photon being in the superposition of multiple temporal modes into a photon being in a single mode scales logarithmically with the number of modes.

After passing through the receiver modules, the time of detection of each of the photons depends on phase relations between photon superposition components, and on the sets (ϕ^{A}_{*m-1*,}ϕ^{A}_{*m-2*,....,}ϕ^{A}_{*2*,}ϕ^{A}_{*1*,}ϕ^{A}₀), (ϕ^{B}_{*m-1*,}ϕ^{B}_{*m-2*,....,}ϕ^{B}_{*2*,}ϕ^{B}_{*1*,}ϕ^{B}₀) of phase shifts imprinted in the individual receivers. The detection times of each of the photons are unknown prior to the measurements; however, thanks to the temporal entanglement within each pair, there are very strong correlations between the arrival times of the photons. In particular, when both receiver A and receiver B are not imprinting an additional phase in any of the modules, the photons within one pair are recorded by the receivers always at the same time (provided the distance from the transmitter to both receivers is the same). The sets of phases (ϕ^{A}_{*m-1*,}ϕ^{A}_{*m-2*,....,}ϕ^{A}_{*2*,}ϕ^{A}_{*1*,}ϕ^{A}₀), and (ϕ^{B}_{*m-*1,}ϕ^{B}_{*m-2*,....,}ϕ^{B}_{2,}ϕ^{B}_{1,}ϕ^{B}₀) define the measurement basis of each of the m received qubits for each of the receivers. The qubit i is measured in receiver A in a basis defined by (ϕ^{A}ᵢ, and in a basis defined by ϕ^{B}ᵢ in receiver B. In order to implement the E91 protocol, the values of phases in receiver A are set as ϕ^{A}*ᵢ* = 0, π/2 or π/4, and in receiver B as ϕ^{B}*ᵢ* = 0, π/4 or -π/4. The selection of phases within each of the threes for the individual qubits should be implemented in a completely random manner for each of the receivers. This can be implemented, e.g. by means of a quantum random number generator placed in each of the receivers (e.g.: IDQuantique - Quantis Random Number Generator). Both the first and the second receiving party write the temporal position of the photon detection *k_{A}, k_{B}* as *k_{A}* = b^{A}*₀*+ b*^{A}₁* x 2+ b*^{A}₂* x 4 + ... + b*^{A}ₘ₋₂* x 2*^{m-2} +* b*^{A}ₘ₋₁* × 2*^{m-1}* and *k_{B}* = b*^{B}₀* + b*^{B}₁* x 2 + b*^{B}₂* x 4 + ... + b*^{B}ₘ₋₂* x *2^{m-2}* + b*^{B}ₘ₋₁* x 2*^{m-1}.* The sequence of bits b*^{A}ₘ₋₁*b*^{A}ₘ₋₂*...b*^{A}₁*b^{A}*₀* and b^{B}*ₘ₋₁*b^{B}*ₘ₋₂*...b*^{B}₁*b^{B}₀ generated in this manner, being in the possession of individual receiving parties, correspond to temporal positions of the photon measured by them, written as the binary number. These positions can be measured by means of a standard single-photon detector and a commercially available electronic system (*time-tagger*)*.* This method is illustrated in Fig. 6 for *m* = 3. The values of bits b^{A}*ᵢ* and *b^{B}ᵢ* are the measurement results of a pair of qubits transmitted by the first and second photon, respectively, in a bases defined by phases describing corresponding modules in the receivers ϕ^{A}*ᵢ* ϕ^{B}*ᵢ*. Similarly as in the E91 protocol, the measurement results for these pairs of qubits, for which the phase selected in receiver A (measurement basis) is identical to the phase (measurement basis) selected in receiver B, are perfectly correlated, and thus they can be used for the generation of the secret key bits. If no photon has been recorded in any of the receivers, the measurement result is not taken under consideration when generating the key.

### Embodiment 3.

### A setup for quantum key distribution by means of a transmitter and a receiver, dedicated to protocols of the prepare and measure type, using qubit basis states, such as SARG04

In this embodiment, the optical signals have the form of pulses of laser light, in particular very weak pulses of laser light.

The transmitter dedicated to protocols of the SARG04 type consists of a source of weakened laser pulses, and an electro-optic quadrature modulator IQ simultaneously modulating the amplitude and the phase of light. The laser pulses can originate from a femtosecond oscillator, or from a continuous wave (CW) laser modulated by a separate amplitude modulator.

Due to the wide availability of optical elements, the wavelength of laser light should be selected from the range (600 - 1700 nm), or from the range of fibre-optics transmission windows (1250 - 1350 nm, 1500 - 1600 nm), or from the free-space transmission window (800 - 850 nm). The bandwidth of the phase modulator reaches several dozen GHz, while the average number of photons in each pulse is considerably lower than one. The temporal distance between consecutive pulses ranges from 20 to 500 ps (picoseconds).

A receiver dedicated to the SARG04 protocol, or other protocols of the *prepare and measure* type using basis states of the qubit, comprises an input, optical elements and a single-photon detector (SPD). In particular, it also comprises at least one module introducing a time delay and a phase shift, described by the parameters "*T*, ϕ, *θ*". Each of the modules comprises at least one polarisation splitting element, an element introducing the difference of optical paths for each of the polarisations, and at least one wave plate rotating the polarisation (HWP, QWP), with the angle of rotation of the polarisation defined by the parameter µ. One part of the optical signal in the receiver propagates in a shorter path, and the other part propagates in a longer path, both optical paths running in optical fibre or in the free-space. For simplicity, the element *"7"* is called a polarisation delay line, which comprises two different optical paths for each polarisation. The polarisation splitting element can be realised as e.g. a polarisation splitting cube (PBS). The element introducing the difference of optical paths for each polarisation is placed between the PBS cubes. The element introducing a phase shift "ϕ" for a part of the optical signal can be realised as e.g. an electro-optic phase modulator (PM). The phase modulator (PM) is placed in the longer or shorter arm of the element introducing the difference of optical paths for each polarisation. The entire single module described by the parameters "*T*, ϕ, *θ*" comprises at least one polarisation modulator (PoIM).

In a system for quantum key distribution by means of a transmitter and a receiver (see Fig. 1 (a,c)), a sequence of 2*^{m}* attenuated optical pulses is generated in the transmitter, where *m* is a natural number. This transmitter is presented in Fig. 2 (c). The positions of individual pulses are numbered as *k* (where *k* = 0, 1, 2...2*^{m}*-1). By means of such a sequence, the transmitter transmits *m* qubits through appropriate modulation of the phase and amplitude of individual pulses, realized in electro-optic quadrature modulator *IQ.* The phase and amplitude of the pulses defined jointly with the use of the complex amplitude are modulated according to the following algorithm:
1. The pulses whose position *k* fulfils the inequality *k mod* 2*^{m}* < 2*^{m-1}* are modulated with the complex amplitude α*ₘ₋₁* , where *mod* means the modulo operation.
2. The pulses whose position *k* fulfils the inequality *k mod* 2*^{m}* ≥ 2*^{m-1}* are modulated with the complex amplitude β*ₘ₋₁,* where *mod* means the modulo operation.
3. The pulses whose position *k* fulfils the inequality *k mod* 2*^{m-1}* < 2^{*m*-2} are **additionally** modulated with the complex amplitude α*ₘ₋₂*
4. The pulses whose position *k* fulfils the inequality *k mod* 2*^{m-1}* ≥ 2*^{m-2}* are **additionally** modulated with the complex amplitude β*ₘ₋₂*
5. The pulses whose position *k* fulfils the inequality *k mod* 2^{*m*-2} < *2^{m-3}* are **additionally** modulted with the complex amplitude α*ₘ₋₃*
6. The pulses whose position *k* fulfils the inequality *k mod* 2^{*m*-*2*} ≥ *2^{m-3}* are **additionally** modulated with the complex amplitude β*ₘ₋₃*
7. The procedure continues until the last step, in which the pulses whose position fulfils the inequality *k mod* 2 < 1 are **additionally** modulated with the complex amplitude α*₀*, while the pulses whose position fulfils the inequality *k mod* 2 ≥ 1 are **additionally** provided with the complex amplitude β*₀*

The procedure presented above for *m* = 3 is illustrated in Fig. 2 (c). After the the abovementioned operations for *m* = 3, the complex amplitudes describing eight pulses have the following form: α*₀*α*₁*α*₂,* β*₀*α*₁*α*₂,* α*₀*β*₁*α*₂,* β*₀*β*₁*α*₂,* α*₀*α*₁*β*₂,* β*₀*α*₁*β*₂,* α*₀*β*₁*β*₂,* β*₀*β*₁*β*₂*. The states of the individual qubits have been defined by pairs of complex amplitudes (α*_{m-1,}* β*_{m-1,}* α*_{m-2,}* β*_{m-2,...,}* α*_{1,}* β_{*1*,} α*_{0,}* β*₀* ) whose modulus squared defines the probability of detecting qubit m in the corresponding basis state. Generally, the transmitter is capable of transmitting qubits in any quantum state, i.e. in any superposition of basis states. A particular case of using the transmitter is the implementation of the SARG04 protocol, in which the transmitter transmits qubits in an equal superposition of basis states and phases between its components 0 or π (i.e. those for which |α*ᵢ*|=|β*ᵢ*| and arg(α*ᵢ*)-arg(β*ᵢ*)={0, π}), being the equivalent of diagonal/antidiagonal polarisation, or alternatively qubits in the basis states (i.e. those for which α*ᵢ* or β*ᵢ* = 1), being the equivalent of vertical/horizontal polarisation. The transmitting of qubits in equal superposition or qubits in basis states is called selection of the transmission basis. In the SARG04 protocol, the value of bit 0 is associated with vertical and horizontal polarisations (a qubit transmitted in the basis states), while the value of bit 1 is associated with diagonal and antidiagonal polarisations (a qubit transmitted in equal superpositions of basis states). A sequence of pulses prepared in such a manner is transmitted to the receiver through optical fibre or free-space channel.

For a sequence with a length of *2^{m},* the receiver presented in Fig. 3 (c) comprises *m* modules connected in sequence, with a decreasing temporal delay 2^{*m*-1}**τ**,...,2**τ**,1**τ**, where **τ** is the inverse of the pulse generation frequency. Inside the receiver, the individual pulses of the attenuated light interfere constructively, in such a manner that, at the output of the receiver, the entire optical energy carried by a sequence is concentrated in a single pulse. An exemplary scheme of the receiver for which *m* = 3 is presented in Fig. 3 (c), while the scheme of module components is presented in Fig. 4(c). The first element of each of the modules is a polarisation modulator (PoIM), which, regardless of the input sequence, rotates the polarisation of selected pulses by +90° or -90° according to the direction of arrows, in front of the modules presented in Fig. 5(b). Subsequently, pulses polarised horizontally are delayed with respect to pulses polarised vertically by a time delay "*T*" characteristic for each module. In addition, these pulses are modulated with a phase "ϕ" by means of an electro-optic modulator. During the measurement of qubits in equal superposition of basis states, by coherently interfering with each other, the pulses are polarised diagonally or antidiagonally when leaving the polarisation delay line. Subsequently, diagonal polarisations are changed into linear polarisations using a half-wave plate HWP rotated by the angle *θ*/2 = 22.5° (i.e. rotating polarisation by the angle *θ* = 45°). During the measurement of qubits in basis states, the pulses are polarised vertically or horizontally when leaving the polarisation delay line. Subsequently, the polarisations are swapped using a half-wave plate HWP rotated by the angle *θ*/2 = 45° (i.e. rotating polarisation by the angle *θ* = 90°). When the receiving party's measurement basis corresponds to the one selected by the transmitting party to prepare the state of the qubit, the length of the sequence of optical pulses after interference is either shortened two times (when the qubit has been transmitted in equal superposition of basis states), or it remains unchanged (when the qubit has been transmitted in basis states). At the end of each of the modules, there is a second polarisation delay line introducing a time delay of "T" for horizontal polarisation. With a proper setting of phases in electro-optic modulators PM, placed in modules of the receiver, and a proper setting of the rotation angles of the half-wave plate HWP, after passing through *m* modules, the entire optical energy carried by a sequence of 2*^{m}* optical pulses is cumulated in a single pulse, which, due to its high power, can be easily recorded, e.g. by means of an avalanche photo-diode SPD. The number of modules necessary to convert a sequence of pulses into a single pulse scales logarithmically with the length of the sequence.

The temporal position of the output pulse depends on the phase and amplitude relations between pulses in the sequence, and it depends on the set (α*_{m-1,}* β*_{m-1,}* α*_{m-2,}* β*_{m-2,...,}* α*_{1,}* β_{*1*,} α_{*0*,} β*₀* ), based on which individual pulses are modulated with complex amplitudes in the transmitter, and on the set (ϕ^{D}_{*m-1*,} *θ* ^{D}*ₘ₋₁* ,ϕ^{D}_{*m-2*,} *θ*^{D}_{*m-2*,....,}ϕ^{D}₂*_{,}θ*^{D}*₂* ,ϕ^{D}_{1,}*θ* ^{D}*₁* ,ϕ^{D}_{0,} *θ* ^{D}₀) of phases, with which the pulses are modulated in the receiver, as well as the angles of rotation of polarisation in its individual modules. The set of phases and angles of rotation of the polarisation (ϕ^{D}_{*m-1*,} *θ*^{D}*ₘ₋₁* ,ϕ^{D}_{*m-2*,}*θ*^{D}_{*m-2*,....,}ϕ^{D}_{2,}*θ*^{D}₂ ,ϕ^{D}_{1,}*θ*^{D}₁ ,ϕ^{D}_{0,}*θ*^{D}₀) defines the measurement basis of each of the *m* received qubits. In particular, for the SARG04 protocol, a setting of the phase at ϕ^{D}*ᵢ* = 0 and the angle of polarisation rotation at *θ* = 45° is equivalent to measuring qubit *i* in the diagonal/antidiagonal polarisation basis (i.e. the measurement of qubits in an equal superposition of basis states), while a setting of the phase at ϕ^{D}*ᵢ* = 0 and of the angle of polarisation rotation at *θ* = 90° is equivalent to measuring qubit *i* in the vertical/horizontal polarisation basis (i.e. the measurement of qubits in basis states). After the measurement of the output pulse, the measured temporal position of the pulse *k* is to be written in the binary system as *k* = b*₀* + b*₁* x 2+ b*₂* x 4 + ... + b*ₘ₋₂* x 2*^{m-2}* + b*ₘ₋₁* x 2*^{m-1}.* The sequence of bits b*ₘ₋₁*b_{*m-2*...}b*₁*b*₀* generated in this manner corresponds to the temporal position of the measured photon written as the binary number. The value of bit b*ᵢ* is the measurement result of qubit *i* in the basis defined by the phase shift ϕ^{D}*ᵢ* and the angle of polarisation rotation *θ*^{D}*ᵢ.* This position is measured by means of a single-photon detector SPD and commercially available electronic systems (*time-tagger*)*.* This scheme is illustrated in Fig. 6 for *m* = *3*.

In the SARG04 protocol, the transmitting party publicly declares which pair of nonorthogonal polarisations they used to encode the bit, i.e. {horizontal, diagonal}, {vertical, diagonal}, {vertical, antidiagonal}, {horizontal, antidiagonal}. When the receiving party record the state orthogonal to one of the states from the declared pair, they are absolutely certain that the transmitting party has transmitted the other state from the declared pair. For example, when the transmitting party has declared that they have encoded a bit in the {horizontal, diagonal} pair of polarisations, while the receiving party has measured the pulse in the vertical polarisation, they are absolutely certain that the transmitting party has transmitted bit 1 associated with diagonal polarisation. In the SARG04 protocol, the selection of the measurement basis in the receiver is entirely random. If no pulse has been recorded, or when the pulse has been measured in a state which is not orthogonal to one of the states from the declared pair, the measurement is rejected as inconclusive, and it is not taken under consideration when generating the key.

### Embodiment 4

### An alternative embodiment of a receiver for the implementation of type BB84 or E91 protocols, comprising a correction subsystem/system, increasing the signal acceptance angle of the receiver.

In this embodiment, the optical signals, in particular very weak optical signals, have the form of pulses of laser light (referring to the BB84 type protocol) or pairs of entangled photons (referring to the E91 type protocol).

The alternative embodiment of the receiver is presented in Fig. 7, consisting of three parts (a-c). Realisation of the invention is particularly beneficial for transmitting the signal via free-space channel, e.g. using a pair of ground telescopes, or one of the telescopes placed in an orbiting satellite, while the other one being on the ground surface, or two satellites communicating with each other.

Fig. 7 (a) presents a general scheme of the receiver enabling conversion of the incoming signal into a single optical pulse, analogically to the receiver presented in Fig. 3. The conversion of pulses takes place in connected modules (represented by grey rectangles) described by the introduced time delay "*T*" and the phase shift "ϕ".

Each module "*T*, ϕ" consists of a sub-module introducing the time delay *"7"* and a sub-module introducing the phase shift "ϕ". Each module shortens the length of the incoming sequence twice, cumulating in the shortened sequence the total optical energy carried by the signal.

Fig. 7 (b) presents a single module "*T*, ϕ" for temporal conversion of pulses, which has been additionally provided with two correction subsystems/systems, increasing the acceptance angle of the input signal. This figure presents a new embodiment of the invention, consisting of two polarisation splitting cubes (PBS) instead of four cubes (presented in Fig. 4). The first polarisation splitting cube (PBS), where the sequence of pulses previously modulated using a polarisation modulator (PoIM) enters, splits pulses with orthogonal polarisations. Subsequently, pulses with orthogonal polarisations are recombined using two independent quarter-wave plates (QWP), behind which mirrors are placed. The distance between the first PBS cube and one mirror is greater than the distance between the first PBS cube and the second mirror. Different optical paths cause both split sequences of optical pulses to return simultaneously to the first polarisation splitting cube (PBS). Both split sequences of pulses are recombined in the first PBS cube, where the amplification of the individual pulses and a decrease in their number by a half occur due to constructive interference. Upon passing through the half-wave plate (HWP) rotating the polarisation of pulses by 45°, the pulses are directed towards the second PBS cube, behind which two mirrors have been placed at various distances from the cube. It is the objective of the second PBS cube, the pair of quarter-wave plates and the pair of mirrors, to introduce a polarisation-dependent time delay. Both between the first PBS cube and one of the mirrors which surround it, as well as between the second PBS cube and one of the mirrors which surround it, a correction subsystem/system has been placed, increasing the acceptance angle of the input signal.

Fig. 7 (c) presents an exemplary implementation of the correction subsystem/system (used in order to increase the angle of acceptance of the input signal), which can be realized as dielectric block with a properly selected refractive index, or a linear optics system. In an alternative solution, the correction system has been presented as a system of linear optics, consisting of two lenses of the same focal length, being at a distance of two focal lengths apart from each other; such a system is commonly called the 4*f* system.

### Possible areas of using the invention

The present invention is useful in telecommunication devices for public quantum key distribution and encrypted transmission of data. Thanks to the use of light as a carrier of information, the invention can be used in quantum communication infrastructure (QCI), both ground-based using a fibre-optics transmission medium, as well as satellite, based on free-space transmission. Due to much lower attenuation of the signal, the implementation of the invention in the version incorporating free-space transmission channel can be used to transmit encrypted data or a cryptographic key over long distances.

### Acknowledgements

The inventors would like to thank the Quantum Optical Technologies Centre Unit (QOT, project no. MAB/2018/4) at the University of Warsaw, and the International Centre for Theory of Quantum Technologies (ICTQT, project no. MAB/2018/5) at the University of Gdańsk, which are managed under the programme of International Research Agendas of the Foundation for Polish Science and co-funded from European Union subsidies, from the resources of the Intelligent Development Operational Programme (priority axis IV, action 4.3.).

## Claims

1. A method for quantum key distribution between a transmitter equipped with a source of optical pulses, in particular very weak optical pulses, and a receiver equipped with a single-photon detector, in which the cryptographic key is transmitted in consecutive qubits by means of a transmitter, wherein for each sequence of m qubits
a) the transmitter transmits a sequence of 2*^{m}* optical pulses, which are subjected to multi-state modulation, mapping the bits of the cryptographic key into the states of qubits according to a modulation bases selected randomly from a set of at least two bases;
b) the receiver receives the sequence of 2*^{m}* optical pulses, which are subjected to multi-state demodulation, mapping the states of qubits into the bits of the cryptographic key according to a demodulation bases selected randomly from said set of at least two bases, while;
c1) m identifiers of the used demodulation bases are transmitted from the receiver to the transmitter by means of a classical communication channel, while *m* identifiers of the used modulation bases are transmitted from the transmitter to the receiver by means of a classical communication channel, and the results of the measurements of the time of arrival of optical pulses, for which the transmitting party and the receiving party selected identical basis, are used to generate a secret cryptographic key;
or
c2) information about which pair of qubit states was used to encode the logical bit 0 and the logical bit 1, respectively, is transmitted from the transmitter to the receiver by means of a classical communication channel, and information about when a qubit state orthogonal to any of the states listed in the pair was detected in the receiver is transmitted from the receiver to the transmitter, while the cryptographic key is generated based on the measurements of the time of arrival of optical pulses, for which a qubit state orthogonal to any of the states listed in the pair was detected in the receiver; or
c3) *m* identifiers of the used demodulation bases are transmitted between the receiver and a further receiver via a classical channel, and the cryptographic key is created based on the measurements of the time of arrival of optical pulses, for which identical demodulation basis was selected in each of the receiver and the further receiver;
**wherein**
multi-state modulation is a modulation of the phase and/or amplitude of optical pulses, in which, for the first one of *m* bits of the cryptographic key, the sequence of 2*^{m}* optical pulses is divided into two subsequences comprising an equal number of 2*^{m-1}* optical pulses, wherein the phase and/or amplitude of both subsequences are being determined based on the bit value of the cryptographic key and the selected modulation basis, and the operation is subsequently repeated for consecutive *m*-1 bits of the cryptographic key, each time subjecting to modulation twice shorter subsequences respectively,
while demodulation is performed in a multi-stage setup with the number of stages corresponding to the number of qubits *m*, in which, at each stage, the sequence of 2*^{m}* pulses is divided into two equal subsequences of 2*^{m-1}* optical pulses each; the first subsequence is temporally delayed in order to synchronise it with the second subsequence, the phase of pulses in one of the subsequence is shifted by a value determined by the selected demodulation basis, and the subsequences are subsequently interfered, so that a single optical pulse measured in one of 2*^{m}* temporal positions is produced after the last stage of the setup, wherein the bits of the cryptographic key are being generated based on this position,
and wherein said transmitter comprises
an electro-optic phase modulator - for alternative c1) above
or
a quadrature modulator - for alternative c2) above
or
a source of entangled photon pairs - for alternative c3) above.

2. The method for quantum key distribution according to claim 1, which uses pulses of laser light, in particular very weak pulses of laser light, as optical pulses, and moreover uses a transmitter and a receiver connected to each other via a classical communication channel and a quantum communication channel,
**characterised in that** the phase of pulses of laser light transmitted from the transmitter is determined according to the following algorithm:
(i) the pulses whose position *k* fulfils the inequality *k mod* 2*^{m}* ≥ 2*^{m-1}* are modulated with the phase ϕ*ₘ₋₁*, where *mod* means the modulo operation;
(ii) the pulses whose position *k* fulfils the inequality *k mod* 2*^{m-1}* ≥ 2^{*m*-2} are additionally modulated with the phase ϕ*ₘ₋₂*;
(iii) the pulses whose position *k* fulfils the inequality *k mod* 2^{*m*-2} ≥ *2^{m-3}* are additionally modulated with the phase ϕ*ₘ₋₃*;
(iv) the procedure continues until the last step, in which the pulses whose position fulfils the inequality *k mod* 2 ≥ 1 are additionally modulated with the phase ϕ*₀*;
wherein the values of phases in the set (ϕ*ₘ₋₁* ϕ*ₘ₋₂...*ϕ*₁*ϕ*₀*) encoding the values of *m* logical bits are for example 0,π,π/2,3π/2.

3. The method for quantum key distribution according to claim 1, which uses pulses of laser light, in particular very weak pulses of laser light, as optical pulses, and moreover uses a transmitter and a receiver connected to each other via a classical communication channel and a quantum communication channel,
**characterised in that** the complex amplitude of pulses of laser light transmitted from the transmitter is determined according to the following algorithm:
(i) the pulses whose position *k* fulfils the inequality *k mod* 2*^{m}* < 2*^{m-1}* are modulated with the complex amplitude α*ₘ₋₁* , where *mod* means the modulo operation;
(ii) the pulses whose position *k* fulfils the inequality *k mod* 2*^{m}* >, 2*^{m-1}* are modulated with the complex amplitude β*ₘ₋₁* , where *mod* means the modulo operation;
(iii) the pulses whose position *k* fulfils the inequality *k mod 2^{m-1}* < *2^{m-2}* are additionally modulated with the complex amplitude α_{*m-*2};
(iv) the pulses whose position *k* fulfils the inequality *k mod* 2*^{m-1}* ≥ 2^{*m*-}*²* are additionally modulated with the complex amplitude β*ₘ₋₂*;
(v) the pulses whose position *k* fulfils the inequality *k mod* 2^{*m*-}*²* < *2^{m-3}* are additionally modulated with the complex amplitude α*ₘ₋₃*;
(vi) the pulses whose position *k* fulfils the inequality *k mod* 2*^{m-2}* ≥ *2^{m-3}* are additionally modulated with the complex amplitude β*ₘ₋₃*;
(vii) the procedure continues until the last step, in which the pulses whose position fulfils the inequality *k mod* 2 < 1 are additionally modulated with the complex amplitude α*₀*, while the pulses whose position fulfils the inequality *k mod* 2 ≥ 1 are additionally modulated with the complex amplitude β*₀*;
wherein the values of complex amplitudes pairs in the set (*α_{m-1,}* β_{*m-1*,} *α_{m-2,}* β_{*m-2*,...,} α_{*1*,} β_{*1*,} α_{*0*,} β*₀*) defining *m* states of the transmitted qubits equal for example (α*ᵢ*=0, *βᵢ* = 1), (α*ᵢ* =1, β*ᵢ*= 0), (α*ᵢ*=1/√2, β*ᵢ*= 1√2),(α*ᵢ*=1/√2, β*ᵢ*= -1√2).

4. The method for quantum key distribution according to claim 1, which uses entangled photon pairs as optical pulses, in particular very weak optical pulses, and moreover a source of entangled photon pairs is used as a transmitter, and the cryptographic key is generated between two receivers equipped with a detector of optical pulses in the form of a single-photon detector, in which, based on the measurements of the arrival time of the photon performed for photons incoming from the transmitter in a superposition of 2*^{m}* pulses each the consecutive bits of the cryptographic key are generated, while each measured photon pair enables the generation of *m* bits of the cryptographic key, and, by means of receivers, the pairs of entangled photons are received in a superposition of 2*^{m}* pulses each, for which the measurement of the arrival time of the photon is performed, according to a basis selected randomly from a set of three bases, generating bits of the cryptographic key based on the measurement results of the arrival time of the photon, while information on the *m* identifiers of the used measurement bases is exchanged between the receivers by means of a classical communication channel,
**characterised in that**
the measurement of the arrival time of the photons, being in the superposition of 2*^{m}* pulses each, is performed in a multi-stage setup with the number of stages *m,* in which, at each stage, the sequence of pulses is divided into two equal subsequences; the first subsequence is temporally delayed in order to synchronise it with the second subsequence, the phase of pulses in one of the subsequences is shifted by the value determined by the measurement basis, and the subsequences are subsequently interfered, so that a single pulse with an energy of at most one photon measured in one of the 2*^{m}* temporal positions is produced after the last stage, wherein the bits of the cryptographic key are being generated based on this position.

5. A method for transmitting modulated optical pulses dedicated to quantum key distribution, which uses a transmitter equipped with a source of pulses of laser light, in particular very weak pulses of laser light, connected with an optical phase modulator via optical fibre, the cryptographic key is transmitted in the consecutive qubits by means of a transmitter, wherein, for each sequence of *m* qubits, the transmitter transmits a sequence of 2*^{m}* pulses of laser light, which are subjected to multi-state modulation, mapping the bits of the cryptographic key into the states of qubits according to the modulation bases selected randomly from a set of at least two bases,
**wherein**
multi-state modulation is a modulation of the phase of pulses of laser light, in which, for the first one of *m* bits of the cryptographic key, a sequence of 2*^{m}* pulses of laser light is divided into two subsequences comprising an equal number of 2*^{m-1}* optical pulses, wherein the phase of both subsequences is being determined based on the bit value of the cryptographic key and the selected modulation basis, and the operation is subsequently repeated for consecutive *m*-1 bits, each time separately subjecting to modulation twice shorter subsequences respectively.

6. A method for transmitting modulated optical pulses dedicated to quantum key distribution, which uses a transmitter equipped with a source of pulses of laser light, in particular very weak pulses of laser light, connected to a quadrature modulator IQ via optical fibre, the cryptographic key is transmitted in the consecutive qubits by means of a transmitter, wherein, for each sequence of *m* qubits, the transmitter transmits a sequence of 2*^{m}* pulses of laser light, which are subjected to multi-state modulation, mapping the bits of the cryptographic key into the states of qubits according to the modulation bases selected randomly from a set of at least two bases, **wherein**multi-state modulation is a modulation of the complex amplitude of pulses of laser light, in which, for the first one of *m* bits of the cryptographic key, a sequence of 2*^{m}* pulses of laser light is divided into two subsequences comprising an equal number of 2*^{m-1}* optical pulses, wherein the complex amplitude of both subsequences is being determined based on the bit value of the cryptographic key and the selected modulation basis, and the operation is subsequently repeated for consecutive *m-1* bits, each time subjecting to modulation twice shorter subsequences respectively.

7. A method for receiving optical pulses, dedicated to quantum key distribution, which uses pulses of laser light, in particular very weak pulses of laser light, as optical pulses, and moreover uses a receiver equipped with a single-photon detector, in which the receiver receives a sequence of 2*^{m}* pulses of laser light, which are subjected to multi-state demodulation, mapping *m* states of qubits into *m* bits of the cryptographic key according to a demodulation bases selected randomly from said set of at least two bases,
**wherein**
demodulation is performed in a multi-stage setup, with the number of stages corresponding to the number of qubits *m,* in which, at each stage, the sequence of 2*^{m}* pulses of laser light is divided into two equal subsequences of 2*^{m-1}* pulses, the first subsequence is temporally delayed in order to synchronise it with the second subsequence, the phase of pulses in one of the subsequences is shifted by a value according to the selected demodulation basis, and the subsequences are subsequently interfered, so that a single pulse of laser light measured in one of 2*^{m}* temporal positions is produced after the last stage of the setup, wherein the bits of the cryptographic key are being generated based on this position.

8. The method according to claim 7, **characterised in that,** in addition, after subsequences interference, the polarisation of all pulses is rotated by the angle *θ* determined separately for each of the stages of the setup.

9. A method for receiving optical pulses, dedicated to quantum key distribution, which uses entangled photon pairs as optical pulses, in particular very weak optical pulses, and moreover uses a pair of receivers equipped with a single-photon detector, in which, based on measurements of the arrival time of the photon performed for photons recorded in the receiver in the superposition of 2*^{m}* light pulses each, the consecutive bits of the cryptographic key are generated, wherein a source of entangled photon pairs is used as the transmitter, while each measured pair of photons enables the generation of *m* bits of the cryptographic key, and the receivers receive the entangled photon pairs in the superposition of 2*^{m}* optical pulses each, for which the measurement of the arrival time of the photon to the receiver is performed according to a basis selected randomly from a set of at least two bases, generating the bits of the cryptographic key based on the measurement results of the arrival time of the photon to the receiver, while information on the *m* identifiers of the used measurement bases is exchanged between the receivers by means of a classical communication channel,
**wherein**
the measurement of the arrival time of the photons to the receiver, being in the superposition of 2*^{m}* optical pulses each, is performed in a multi-stage setup with the number of stages *m,* in which, at each stage, the sequence of pulses is divided into two equal subsequences of 2*^{m-1}* pulses, the first subsequence is temporally delayed in order to synchronise it with the second subsequence, the phase of pulses in one of the subsequences is shifted by the value determined by the measurement basis, and the subsequences are subsequently interfered, so that a single pulse with an energy of at most one photon measured in one of the 2*^{m}* temporal positions is produced after the last stage, wherein the bits of the cryptographic key are being generated based on this position.

10. A receiver of optical pulses, in particular very weak optical pulses, in particular in the form of very weak pulses of laser light or in the form of single photons, dedicated to the quantum key distribution, comprising an input, optical elements and a detector, which comprises at least one module (*T,* ϕ) or (*T,* ϕ, *θ*), wherein module comprises at least one polarisation splitting element, an element introducing the difference of optical paths for each of the split polarisations, and at least one waveplate rotating the polarisation (HWP, QWP), with a fixed or adjustable angle of polarisation rotation *θ*, and in which a part of the optical signal propagates in a shorter path and a part of the optical signal propagates in a longer path,
**characterised in that**
the module (*T,* ϕ) or (*T,* ϕ, *θ*) comprises at least one polarisation modulator (PoIM), the element splitting the polarisations is a polarisation-splitting cube (PBS) placed after a polarisation modulator (PoIM), the element introducing the difference of optical paths for each of the split polarisations is placed between two polarisation-splitting cubes (PBS), and in addition an element introducing the phase shift "ϕ" is placed in at least one of the optical paths,
wherein said elements are distributed and configured to perform demodulation in a multi-stage setup, with the number of stages corresponding to the number of qubits *m,* in which, at each stage, the sequence of 2*^{m}* optical pulses is divided into two equal subsequences of 2*^{m-1}* optical pulses, the first subsequence is temporally delayed in order to synchronise it with the second subsequence, the phase of pulses in one of the subsequences is shifted by a value determined by the selected demodulation basis, and the subsequences are subsequently interfered, so that a single pulse of laser light measured in one of 2*^{m}* temporal positions is produced after the last stage of the setup, wherein the bits of the cryptographic key are being generated based on this position.

11. The receiver according to claim 10, **characterised in that** it comprises at least two modules (T, ϕ) or at least two modules (T, ϕ, θ), wherein, in the first such module, the optical path intended for a part of the optical signal is shorter, and the optical path intended for the remaining part of the optical signal is longer, while, in each consecutive module, the longer optical path is two times shorter than the longer optical path in the module directly preceding it.

12. The receiver according to claim 10 or 11, **characterised in that** it is equipped with a single-photon detector for detecting the optical pulses, placed at the output of the receiver setup.

13. The receiver according to any of the claims 10-12, **characterised in that** the element introducing the difference of optical paths for each of the split polarisations is an optical fibre and/or free-space optical path.

14. The receiver according to any of the claims 10-13, **characterised in that** the element introducing the phase shift "ϕ" is placed in the longer or shorter optical path, between two polarisation-splitting cubes (PBS).

15. The receiver according to any of the claims 10-14, **characterised in that** it comprises a correction system, which increases the acceptance angle of the input signal.

## Patentansprüche

1. Verfahren zur Quantenschlüsselverteilung zwischen einem mit einer Quelle optischer Impulse, insbesondere sehr schwacher optischer Impulse, ausgestatteten Sender und einem mit einem Einzelphotonendetektor ausgestatteten Empfänger, bei dem der kryptographische Schlüssel in aufeinanderfolgenden Qubits mittels eines Senders übertragen wird, wobei für jede Folge von *m* Qubits
a) der Sender eine Folge von 2 *^{m}* optischen Impulsen sendet, die einer Multizustandsmodulation unterzogen werden, wobei die Bits des kryptographischen Schlüssels auf die Zustände der Qubits gemäß einer Modulationsbasis abgebildet werden, die zufällig aus dem Set von mindestens zwei Basen ausgewählt wird;
b) der Empfänger eine Folge von 2 *^{m}* optischen Impulsen empfängt, die einer Multizustandsdemodulation unterzogen werden, wobei die Zustände der Qubits in die Bits des kryptographischen Schlüssels gemäß einer Demodulationsbasis abgebildet werden, die zufällig aus dem Set von mindestens zwei Basen ausgewählt wird, während;
c1) *m* Kennungen der verwendeten Demodulationsbasen vom Empfänger zum Sender über einen klassischen Kommunikationskanal übertragen werden, während *m* Kennungen der verwendeten Modulationsbasen vom Sender zum Empfänger über einen klassischen Kommunikationskanal übertragen werden, und die Ergebnisse der Messungen der Ankunftszeit optischer Impulse, für die die sendende Partei und die empfangende Partei identische Basen ausgewählt haben, verwendet werden, um einen geheimen kryptographischen Schlüssel zu erzeugen;
oder
c2) Informationen darüber, welches Paar von Qubit-Zuständen verwendet wurde, um das logische Bit 0 bzw. das logische Bit 1 zu kodieren, werden vom Sender zum Empfänger mittels eines klassischen Kommunikationskanals übertragen, und Informationen darüber, wann ein Qubit-Zustand, der orthogonal zu irgendeinem der in dem Paar aufgeführten Zustände ist, in dem Empfänger detektiert wurde, von dem Empfänger zu dem Sender übertragen werden, während der kryptographische Schlüssel auf der Grundlage der Messungen der Ankunftszeit von optischen Impulsen erzeugt wird, für die ein Qubit-Zustand, der orthogonal zu irgendeinem der in dem Paar aufgeführten Zustände ist, in dem Empfänger detektiert wurde;
oder
c3) *m* Kennungen der verwendeten Demodulationsbasen werden zwischen dem Empfänger und einem weiteren Empfänger über einen klassischen Kanal übertragen, und der kryptografische Schlüssel wird auf der Grundlage der Messungen der Ankunftszeit optischer Pulse erzeugt, für die in jedem der Empfänger und dem weiteren Empfänger eine identische Demodulationsbasis ausgewählt wurde;
**wobei**
eine Multizustandsmodulation eine Modulation der Phase und/oder Amplitude von optischen Impulsen ist, bei der für das erste von *m* Bits des kryptographischen Schlüssels die Folge von 2 *^{m}* optischen Impulsen in zwei Teilsequenzen unterteilt wird, die eine gleiche Anzahl von 2*^{m-1}* optischen Impulsen umfassen, wobei die Phase und/oder Amplitude beider Teilsequenzen auf der Grundlage des Bitwerts des kryptographischen Schlüssels und der ausgewählten Modulationsbasis bestimmt werden, und der Vorgang anschließend für aufeinanderfolgende *m-1* Bits des kryptographischen Schlüssels wiederholt wird, wobei jedes Mal zweimal kürzere Teilsequenzen einer Modulation unterzogen werden,
während die Demodulation in einem mehrstufigen Aufbau durchgeführt wird, wobei die Anzahl der Stufen der Anzahl der Qubits *m* entspricht und in jeder Stufe die Folge von 2 *^{m}* Impulsen in zwei gleiche Teilsequenzen von jeweils 2*^{m-1}* optischen Impulsen unterteilt wird; die erste Teilsequenz wird zeitlich verzögert, um sie mit der zweiten Teilsequenz zu synchronisieren, die Phase der Impulse in einer der Teilsequenzen wird um einen Wert verschoben, der durch die gewählte Demodulationsbasis bestimmt wird, und die Teilsequenzen werden anschließend interferiert, so dass ein einzelner optischer Impuls, der in einer von 2*^{m}* zeitlichen Positionen gemessen wird, nach der letzten Stufe des Aufbaus erzeugt wird, wobei die Bits des kryptographischen Schlüssels basierend auf dieser Position erzeugt werden,
und wobei der Sender Folgendes umfasst
einen elektro-optischen Phasenmodulator - für die obige Alternative c1)
oder
einen Quadraturmodulator - für die obige Alternative c2)
oder
eine Quelle von verschränkten Photonenpaaren - für die obige Alternative c3).

2. Verfahren zur Quantenschlüsselverteilung nach Anspruch 1, das als optische Impulse Laserlichtimpulse, insbesondere sehr schwache Laserlichtimpulse, verwendet und darüber hinaus einen Sender und einen Empfänger verwendet, die über einen klassischen Kommunikationskanal und einen Quantenkommunikationskanal miteinander verbunden sind,
**dadurch gekennzeichnet, dass** die Phase der vom Sender gesendeten Laserlichtimpulse nach dem folgenden Algorithmus bestimmt wird:
(i) die Impulse, deren Position *k* die Ungleichung *k mod* 2*^{m}* ≥ 2*^{m-1}* erfüllt, werden mit der Phase ϕ*ₘ₋₁* moduliert, wobei mod die Modulo-Operation bedeutet;
(ii) die Impulse, deren Position *k* die Ungleichung *k mod* 2*^{m-1}* ≥ 2^{*m*-}*²* erfüllt, werden zusätzlich mit der Phase ϕ*ₘ₋₂* moduliert;
(iii) die Impulse, deren Position *k* die Ungleichung *k mod* 2^{*m*-}*²* ≥ *2^{m-3}* erfüllt, werden zusätzlich mit der Phase ϕ*ₘ₋₃* moduliert;
(iv) das Verfahren wird bis zum letzten Schritt fortgesetzt, in dem die Impulse, deren Position die Ungleichung *k mod 2* ≥ *1* erfüllt, zusätzlich mit der Phase ϕ*₀* moduliert werden;
wobei die Werte der Phasen in dem Set (ϕ*ₘ₋₁* ϕ*ₘ₋₂*... ϕ*₁* ϕ*₀*), die die Werte von *m* logischen Bits codieren, beispielsweise 0, π, π/2, 3π/2 sind.

3. Verfahren zur Quantenschlüsselverteilung nach Anspruch 1, das als optische Impulse Laserlichtimpulse, insbesondere sehr schwache Laserlichtimpulse, verwendet und darüber hinaus einen Sender und einen Empfänger verwendet, die über einen klassischen Kommunikationskanal und einen Quantenkommunikationskanal miteinander verbunden sind,
**dadurch gekennzeichnet, dass** die komplexe Amplitude der vom Sender gesendeten Laserlichtimpulse nach dem folgenden Algorithmus bestimmt wird:
(i) die Impulse, deren Position *k* die Ungleichung *k mod* 2*^{m}* < 2*^{m-1}* erfüllt, werden mit der komplexen Amplitude ϕ*ₘ₋₁* moduliert, wobei *mod* die Modulo-Operation bedeutet;
(ii) die Impulse, deren Position *k* die Ungleichung *k mod* 2*^{m}* ≥ 2*^{m-1}* erfüllt, werden mit der komplexen Amplitude β*ₘ₋₁* moduliert, wobei mod die Modulo-Operation bedeutet;
(iii) die Impulse, deren Position *k* die Ungleichung *k mod* 2*^{m-1}* < 2^{*m*-}*²* erfüllt, werden zusätzlich mit der komplexen Amplitude α*ₘ₋₂* moduliert
(iv) die Impulse, deren Position *k* die Ungleichung *k mod* 2*^{m-1}* ≥ 2*^{m-2}* erfüllt, werden zusätzlich mit der komplexen Amplitude β*ₘ₋₂* moduliert
(v) die Impulse, deren Position *k* die Ungleichung *k mod* 2*^{m-2} < 2^{m-3}* erfüllt, werden zusätzlich mit der komplexen Amplitude α*ₘ₋₃* moduliert
(vi) die Impulse, deren Position *k* die Ungleichung *k mod* 2^{*m*-}*²* ≥ *2^{m-3}* erfüllt, werden zusätzlich mit der komplexen Amplitude β*ₘ₋₃* moduliert
(vii) das Verfahren wird bis zum letzten Schritt fortgesetzt, in dem die Impulse, deren Position die Ungleichung *k mod 2* < 1 erfüllt, zusätzlich mit der komplexen Amplitude α₀ moduliert werden, während die Impulse, deren Position die Ungleichung *k* mod 2 ≥ 1 erfüllt, zusätzlich mit der komplexen Amplitude β*₀* moduliert werden;
wobei die Werte der komplexen Amplitudenpaare in dem Set (α*ₘ₋₁,* β*ₘ₋₁*, α*ₘ₋₂,* β*ₘ₋₁,.*.., α*₁*, β*₁*, α*₀*, β*₀*), die *m* Zustände der übertragenen Qubits definieren, zum Beispiel gleich (α*ᵢ*=0, β*ᵢ*=0), (α*ᵢ*=1, β*ᵢ*=0), (α*ᵢ*=1/√2, β*ᵢ*=1/√2), (α*ᵢ*=1/√2, β*ᵢ*=-1/√2).

4. Verfahren zur Quantenschlüsselverteilung nach Anspruch 1, bei dem verschränkte Photonenpaare als optische Impulse verwendet werden, insbesondere sehr schwache optische Impulse, und außerdem eine Quelle verschränkter Photonenpaare als Sender verwendet wird, und der kryptographische Schlüssel zwischen zwei Empfängern erzeugt wird, die mit einem Detektor für optische Impulse in Form eines Einzelphotonendetektors ausgestattet sind, in dem auf der Grundlage der Messungen der Ankunftszeit des Photons, die für vom Sender ankommende Photonen in einer Überlagerung von jeweils 2*^{m}* Impulsen durchgeführt werden, die aufeinanderfolgenden Bits des kryptographischen Schlüssels erzeugt werden, während jedes gemessene Photonenpaar die Erzeugung von *m* Bits des kryptographischen Schlüssels ermöglicht, und mit Hilfe von Empfängern die Paare verschränkter Photonen in einer Überlagerung von jeweils 2*^{m}* Impulsen empfangen werden, für die die Messung der Ankunftszeit des Photons gemäß einer Basis durchgeführt wird, die zufällig aus einem Set von drei Basen ausgewählt wird, wobei Bits des kryptographischen Schlüssels auf der Grundlage der Messergebnisse der Ankunftszeit des Photons erzeugt werden, während Informationen über die m Identifikatoren der verwendeten Messbasen zwischen den Empfängern über einen klassischen Kommunikationskanal ausgetauscht werden,
**dadurch gekennzeichnet, dass**
die Messung der Ankunftszeit der Photonen, die sich in der Überlagerung von jeweils 2*^{m}* Impulsen befinden, wird in einem mehrstufigen Aufbau mit der Anzahl der Stufen *m* durchgeführt, bei dem in jeder Stufe die Impulsfolge in zwei gleiche Teilsequenzen unterteilt wird; die erste Teilsequenz wird zeitlich verzögert, um sie mit der zweiten Teilsequenz zu synchronisieren, die Phase der Impulse in einer der Teilsequenzen wird um den durch die Messbasis bestimmten Wert verschoben und die Teilsequenzen werden anschließend interferiert, so dass nach der letzten Stufe ein einziger Impuls mit einer Energie von höchstens einem in einer der 2*^{m}* zeitlichen Positionen gemessenen Photon erzeugt wird, wobei die Bits des kryptographischen Schlüssels aufgrund dieser Position erzeugt werden.

5. Ein Verfahren zur Übertragung von modulierten optischen Impulsen, die für die Quantenschlüsselverteilung bestimmt sind, welches einen Sender verwendet, der mit einer Quelle von Laserlichtimpulsen, insbesondere sehr schwachen Laserlichtimpulsen, ausgestattet ist, die über eine optische Faser mit einem optischen Phasenmodulator verbunden sind, wobei der kryptographische Schlüssel in aufeinanderfolgenden Qubits mittels eines Senders übertragen wird, wobei der Sender für jede Folge von *m* Qubits eine Folge von 2*^{m}* Laserlichtimpulsen überträgt, die einer Multizustandsmodulation unterzogen werden, die die Bits des kryptographischen Schlüssels in die Zustände der Qubits gemäß den Modulationsbasen abbildet, die zufällig aus einem Set von mindestens zwei Basen ausgewählt werden,
**wobei**
eine Multizustandsmodulation eine Modulation der Phase der Laserlichtimpulse ist, bei der für das erste von *m* Bits des kryptographischen Schlüssels ein Folge von 2 *^{m}* Laserlichtimpulsen in zwei Teilsequenzen unterteilt wird, die eine gleiche Anzahl von 2*^{m-1}* optischen Impulsen umfassen, wobei die Phase beider Teilsequenzen auf der Grundlage des Bitwerts des kryptographischen Schlüssels und der ausgewählten Modulationsbasis bestimmt wird, und der Vorgang anschließend für aufeinanderfolgende *m-1* Bits wiederholt wird, wobei jedes Mal zweimal kürzere Teilsequenzen einer Modulation unterzogen werden.

6. Ein Verfahren zur Übertragung von modulierten optischen Impulsen, die für die Quantenschlüsselverteilung bestimmt sind, welches einen Sender verwendet, der mit einer Quelle von Laserlichtimpulsen, insbesondere sehr schwachen Laserlichtimpulsen, ausgestattet ist, die über eine optische Faser mit einem Quadraturmodulator *IQ* verbunden sind, wobei der kryptographische Schlüssel in aufeinanderfolgenden Qubits mittels eines Senders übertragen wird, wobei der Sender für jede Folge von *m* Qubits eine Folge von 2*^{m}* Laserlichtimpulsen überträgt, die einer Multizustandsmodulation unterzogen werden, die die Bits des kryptographischen Schlüssels in die Zustände der Qubits gemäß den Modulationsbasen abbildet, die zufällig aus einem Set von mindestens zwei Basen ausgewählt werden,
**wobei** eine Multizustandsmodulation eine Modulation der komplexen Amplitude der Laserlichtimpulse ist, bei der für das erste von *m* Bits des kryptographischen Schlüssels ein Folge von 2 *^{m}* Laserlichtimpulsen in zwei Teilsequenzen unterteilt wird, die eine gleiche Anzahl von 2*^{m-1}* optischen Impulsen umfassen, wobei die komplexe Amplitude beider Teilsequenzen auf der Grundlage des Bitwerts des kryptographischen Schlüssels und der ausgewählten Modulationsbasis bestimmt wird, und der Vorgang anschließend für aufeinanderfolgende *m-1* Bits wiederholt wird, wobei jedes Mal zweimal kürzere Teilsequenzen einer Modulation unterzogen werden.

7. Ein Verfahren zum Empfang von optischen Impulsen, das der Quantenschlüsselverteilung gewidmet ist, welches Laserlichtimpulse, insbesondere sehr schwache Laserlichtimpulse, als optische Impulse verwendet und darüber hinaus einen mit einem Einzelphotonendetektor ausgestatteten Empfänger verwendet, bei dem der Empfänger eine Folge von 2*^{m}* Laserlichtimpulsen empfängt, die einer Multizustandsdemodulation unterzogen werden, wobei *m* Zustände von Qubits in *m* Bits des kryptographischen Schlüssels gemäß einer Demodulationsbasis abgebildet werden, die zufällig aus dem Set von mindestens zwei Basen ausgewählt wird,
**wobei**
die Demodulation in einem mehrstufigen Aufbau durchgeführt wird, wobei die Anzahl der Stufen der Anzahl der Qubits *m* entspricht, in welchem in jeder Stufe die Folge von 2 *^{m}* Laserlichtimpulsen in zwei gleiche Teilsequenzen von jeweils 2*^{m-1}* Impulsen unterteilt wird; die erste Teilsequenz wird zeitlich verzögert, um sie mit der zweiten Teilsequenz zu synchronisieren, die Phase der Impulse in einer der Teilsequenzen wird um einen Wert, entsprechend der Demodulationsbasis verschoben, und die Teilsequenzen werden anschließend interferiert, so dass ein einzelner Laserlichtimpuls, der in einer von 2*^{m}* zeitlichen Positionen gemessen wird, nach der letzten Stufe des Aufbaus erzeugt wird, wobei die Bits des kryptographischen Schlüssels basierend auf dieser Position erzeugt werden.

8. Verfahren nach Anspruch 7, **dadurch gekennzeichnet, dass** zusätzlich nach der Interferenz der Teilsequenzen die Polarisation aller Impulse um den für jede der Aufbaustufen separat ermittelten Winkel 6 gedreht wird.

9. Ein Verfahren zum Empfang von optischen Impulsen, das der Quantenschlüsselverteilung gewidmet ist, welches verschränkte Photonenpaare als optische Impulse verwendet, insbesondere sehr schwache optische Impulse, und welches außerdem ein Paar von Empfängern verwendet, die mit einem Einzelphotonendetektor ausgestattet sind, in welchem, auf der Grundlage von Messungen der Ankunftszeit des Photons, die für Photonen durchgeführt werden, die im Empfänger in der Überlagerung von jeweils 2*^{m}* Lichtimpulsen aufgezeichnet werden, die aufeinanderfolgenden Bits des kryptographischen Schlüssels erzeugt werden, wobei eine Quelle verschränkter Photonenpaare als Sender verwendet wird, während jedes gemessene Paar von Photonen die Erzeugung von *m* Bits des kryptographischen Schlüssels ermöglicht, und die Empfänger die verschränkten Photonenpaare in der Überlagerung von jeweils 2*^{m}* optischen Impulsen empfangen, für die die Messung der Ankunftszeit des Photons beim Empfänger gemäß einer Basis durchgeführt wird, die zufällig aus einem Set von mindestens zwei Basen ausgewählt wird, wobei die Bits des kryptographischen Schlüssels auf der Grundlage der Messergebnisse der Ankunftszeit des Photons beim Empfänger erzeugt werden, während Informationen über die *m* Kennungen der verwendeten Messbasen zwischen den Empfängern über einen klassischen Kommunikationskanal ausgetauscht werden,
**wobei**
die Messung der Ankunftszeit der Photonen beim Empfänger, die sich in der Überlagerung von jeweils 2*^{m}* optischen Impulsen befinden, wird in einem mehrstufigen Aufbau mit der Anzahl der Stufen *m* durchgeführt, bei dem in jeder Stufe die Impulsfolge in zwei gleiche Teilsequenzen der 2*^{m-1}* Impulse unterteilt wird; die erste Teilsequenz wird zeitlich verzögert, um sie mit der zweiten Teilsequenz zu synchronisieren, die Phase der Impulse in einer der Teilsequenzen wird um den durch die Messbasis bestimmten Wert verschoben und die Teilsequenzen werden anschließend interferiert, so dass nach der letzten Stufe ein einziger Impuls mit einer Energie von höchstens einem in einer der 2*^{m}* zeitlichen Positionen gemessenen Photon erzeugt wird, wobei die Bits des kryptographischen Schlüssels aufgrund dieser Position erzeugt werden.

10. Ein Empfänger von optischen Impulsen, insbesondere von sehr schwachen optischen Impulsen, insbesondere in Form von sehr schwachen Laserlichtimpulsen oder in Form von Einzelphotonen, der der Quantenschlüsselverteilung gewidmet ist, mit einem Eingang, optischen Elementen und einem Detektor, der mindestens ein Modul (*T*, *ϕ*) oder (*T, ϕ, θ*) umfasst, wobei das Modul mindestens ein Polarisationsspaltungselement umfasst, ein Element, das die Differenz der optischen Wege für jede der gespalteten Polarisationen einführt, und mindestens eine Wellenplatte, die die Polarisation dreht (HWP, QWP), mit einem festen oder einstellbaren Polarisationsdrehwinkel 0, und in der sich ein Teil des optischen Signals auf einem kürzeren Weg und ein Teil des optischen Signals auf einem längeren Weg ausbreitet,
**dadurch gekennzeichnet, dass**
das Modul (*T*, *ϕ*) oder (*T*, *ϕ, θ*) mindestens einen Polarisationsmodulator (PoIM) umfasst, das Element, das die Polarisationen spaltet, ein polarisationsspaltender Würfel (PBS) ist, der hinter einem Polarisationsmodulator (PoIM) angeordnet ist, das Element, das die Differenz der optischen Wege für jede der gespalteten Polarisationen einführt, zwischen zwei polarisationsspaltenden Würfeln (PBS) angeordnet ist und außerdem ein Element, das die Phasenverschiebung "ϕ" einführt, in mindestens einem der optischen Wege angeordnet ist,
**dadurch gekennzeichnet, dass** die besagten Elemente so verteilt und konfiguriert sind, dass sie die Demodulation in einem mehrstufigen Aufbau durchführen, wobei die Anzahl der Stufen der Anzahl der Qubits *m* entspricht und in jeder Stufe die Folge von 2 *^{m}* Impulsen in zwei gleiche Teilsequenzen von 2^{m-1} optischen Impulsen unterteilt wird; die erste Teilsequenz wird zeitlich verzögert, um sie mit der zweiten Teilsequenz zu synchronisieren, die Phase der Impulse in einer der Teilsequenzen wird um einen Wert verschoben, der durch die gewählte Demodulationsbasis bestimmt wird, und die Teilsequenzen werden anschließend interferiert, so dass ein einzelner Laserlichtimpuls, der in einer von 2*^{m}* zeitlichen Positionen gemessen wird, nach der letzten Stufe des Aufbaus erzeugt wird, wobei die Bits des kryptographischen Schlüssels basierend auf dieser Position erzeugt werden.

11. Ein Empfänger nach Anspruch 10, **dadurch gekennzeichnet, dass** er mindestens zwei Module (*T, ϕ*) oder mindestens zwei Module (*T*, *ϕ, θ*) umfasst, wobei im ersten derartigen Modul der für einen Teil des optischen Signals vorgesehene optische Weg kürzer und der für den verbleibenden Teil des optischen Signals vorgesehene optische Weg länger ist, während in jedem nachfolgenden Modul der längere optische Weg zweimal kürzer ist als der längere optische Weg im unmittelbar vorangehenden Modul.

12. Ein Empfänger nach Anspruch 10 oder 11, **dadurch gekennzeichnet, dass** er mit einem Einzelphotonendetektor zur Detektion der optischen Impulse ausgestattet ist, der am Ausgang des Empfängeraufbaus angeordnet ist.

13. Ein Empfänger nach einem der Ansprüche 10 bis 12, **dadurch gekennzeichnet, dass** das Element, das die Differenz der optischen Wege für jede der geteilten Polarisationen einführt, eine optische Faser und/oder ein optischer Weg im freien Raum ist.

14. Ein Empfänger nach einem der Ansprüche 10 bis 13, **dadurch gekennzeichnet, dass** das Element, das die Phasenverschiebung "ϕ" einführt, in dem längeren oder kürzeren optischen Pfad zwischen zwei Polarisationsteilungen angeordnet ist.

15. Ein Empfänger nach einem der Ansprüche 10 bis 14, **dadurch gekennzeichnet, dass** er ein Korrektursystem umfasst, das den Akzeptanzwinkel des Eingangssignals erhöht.

## Revendications

1. Un procédé de distribution quantique de clé entre un émetteur équipé d'une source d'impulsions optiques, en particulier d'impulsions optiques très faibles, et un récepteur équipé d'un détecteur à photon unique, dans lequel la clé cryptographique est transmise en qubits consécutifs au moyen d'un émetteur, dans lequel pour chaque séquence de m qubits
a) l'émetteur transmet une séquence de 2*^{m}* d'impulsions optiques, qui sont soumises à une modulation multi-états, mappant les bits de la clé cryptographique dans les états des qubits selon une base de modulation sélectionnée aléatoirement parmi un ensemble d'au moins deux bases ;
b) le récepteur reçoit la séquence de 2*^{m}* impulsions optiques, qui sont soumises à une démodulation multi-états, mappant les états des qubits dans les bits de la clé cryptographique selon une base de démodulation sélectionnée aléatoirement parmi ledit ensemble d'au moins deux bases, tandis que ;
c1) m identifiants des bases de démodulation utilisées sont transmis du récepteur à l'émetteur au moyen d'un canal de communication classique, tandis que m identifiants des bases de modulation utilisées sont transmis de l'émetteur au récepteur au moyen d'un canal de communication classique, et les résultats des mesures du temps d'arrivée des impulsions optiques, pour lesquelles la partie émettrice et la partie réceptrice ont sélectionné des bases identiques, sont utilisés pour générer une clé cryptographique secrète ;
ou
c2) l'information indiquant quelle paire d'états de qubit a été utilisée pour coder le bit logique 0 et le bit logique 1, respectivement, est transmise de l'émetteur au récepteur au moyen d'un canal de communication classique, et
l'information indiquant le moment où un état de qubit orthogonal à l'un des états énumérés dans la paire a été détecté dans le récepteur est transmise du récepteur à l'émetteur, tandis que la clé cryptographique est générée sur la base des mesures du temps d'arrivée des impulsions optiques, pour lesquelles un état de qubit orthogonal à l'un des états énumérés dans la paire a été détecté dans le récepteur ;
ou
c3) m identifiants des bases de démodulation utilisées sont transmis entre le récepteur et un autre récepteur par un canal classique, et la clé cryptographique est créée sur la base des mesures du temps d'arrivée des impulsions optiques, pour lesquelles une base de démodulation identique a été sélectionnée dans chacun du récepteur et de l'autre récepteur ;
**dans lequel**
la modulation multi-états est une modulation de la phase et/ou de l'amplitude des impulsions optiques, dans laquelle, pour le premier des m bits de la clé cryptographique, la séquence de 2*^{m}* impulsions optiques est divisée en deux sous-séquences comprenant un nombre égal de 2*^{m-1}* impulsions optiques, dans laquelle la phase et/ou l'amplitude des deux sous-séquences sont déterminées sur la base de la valeur de bit de la clé cryptographique et de la base de modulation sélectionnée, et l'opération est ensuite répétée pour les *m-1* bits consécutifs de la clé cryptographique, chaque fois en soumettant deux fois plus court sous-séquences respectivement à la modulation,
tandis que la démodulation est effectuée dans une configuration à plusieurs étapes, le nombre d'étapes correspondant au nombre de qubits m, dans laquelle, à chaque étape, la séquence de 2*^{m}* impulsions est divisée en deux sous-séquences égales de 2*^{m-1}* impulsions optiques chacune ; la première sous-séquence est retardée dans le temps afin de la synchroniser avec la seconde sous-séquence, la phase des impulsions dans l'une des sous-séquences est décalée d'une valeur déterminée par la base de démodulation sélectionnée, et les sous-séquences sont ensuite interférées, de sorte qu'une seule impulsion optique mesurée dans l'une des 2*^{m}* positions temporelles est produite après la dernière étape de la configuration, les bits de la clé cryptographique étant générés sur la base de cette position,
et dans lequel ledit émetteur comprend
un modulateur de phase électro-optique - pour la variante c1) ci-dessus
ou
un modulateur en quadrature - pour la variante c2) ci-dessus
ou
une source de paires de photons intriqués - pour la variante c3) ci-dessus.

2. Le procédé de distribution quantique de clé selon la revendication 1, qui utilise des impulsions de lumière laser, en particulier de très faibles impulsions de lumière laser, en tant qu'impulsions optiques, et qui utilise en outre un émetteur et un récepteur reliés l'un à l'autre par un canal de communication classique et un canal de communication quantique,
**caractérisé en ce que** la phase des impulsions de lumière laser transmises depuis l'émetteur est déterminée selon l'algorithme suivant :
(i) les impulsions dont la position k satisfait à l'inégalité *k mod 2^{m}* ≥ *2^{m-1}* sont modulées avec la phase ϕ*ₘ₋₁*, où mod représente l'opération modulo ;
(ii) les impulsions dont la position k satisfait à l'inégalité *k mod 2^{m-1}* ≥ *2^{m-2}* sont en outre modulées avec la phase ϕ*ₘ₋₂* ;
(iii) les impulsions dont la position k satisfait à l'inégalité k mod 2^{m-2} ≥ 2^{m-3} sont en outre modulées avec la phase ϕ*ₘ₋₃* ;
(iv) la procédure se poursuit jusqu'à la dernière étape, dans laquelle les impulsions dont la position satisfait à l'inégalité k mod 2 ≥ 1 sont en outre modulées avec la phase ϕ*₀* ;
dans lequel les valeurs des phases de l'ensemble (ϕ_{*m*-*1*} ϕ*ₘ₋₂*... ϕ*₁* ϕ*₀*) codant les valeurs de m bits logiques sont par exemple 0, π, π/2, 3π/2.

3. Le procédé de distribution quantique de clé selon la revendication 1, qui utilise des impulsions de lumière laser, en particulier de très faibles impulsions de lumière laser, en tant qu'impulsions optiques, et qui utilise en outre un émetteur et un récepteur reliés l'un à l'autre par un canal de communication classique et un canal de communication quantique,
**caractérisé en ce que** l'amplitude complexe des impulsions de lumière laser transmises depuis l'émetteur est déterminée selon l'algorithme suivant :
(i) les impulsions dont la position k satisfait à l'inégalité *k mod 2^{m}* < *2^{m-1}* sont modulées avec l'amplitude complexe α*ₘ₋₁*, où mod représente l'opération modulo ;
(ii) les impulsions dont la position k satisfait à l'inégalité k mod 2^{m} ≥ 2^{m-1} sont modulées avec l'amplitude complexe β*ₘ₋₁*, où mod représente l'opération modulo ;
(iii) les impulsions dont la position k satisfait à l'inégalité *k mod 2^{m-1} < 2^{m-2}* sont en outre modulées avec l'amplitude complexe α*ₘ₋₂* ;
(iv) les impulsions dont la position k satisfait à l'inégalité k mod 2^{m-1} ≥ 2^{m-2} sont en outre modulées avec l'amplitude complexe β*ₘ₋₂* ;
(v) les impulsions dont la position k satisfait à l'inégalité *k mod 2^{m-2}* < *2^{m-3}* sont en outre modulées avec l'amplitude complexe α*ₘ₋₃* ;
(vi) les impulsions dont la position k satisfait à l'inégalité *k mod 2^{m-2}* ≥ *2^{m-3}* sont en outre modulées avec l'amplitude complexe β*ₘ₋₃* ;
(vii) la procédure se poursuit jusqu'à la dernière étape, dans laquelle les impulsions dont la position satisfait à l'inégalité *k mod* 2 < 1 sont en outre modulées avec l'amplitude complexe α₀, tandis que les impulsions dont la position satisfait à l'inégalité *k* mod 2 ≥ 1 sont en outre modulées avec l'amplitude complexe β*₀* ;
dans lequel les valeurs des paires d'amplitudes complexes dans l'ensemble (α*ₘ₋₁*, β*ₘ₋₁*, α*ₘ₋₂*, β*ₘ₋₁*,..., α*₁*, β*₁*, α*₀*, β*₀*) définissant m états des qubits transmis égaux, par exemple, à (α*ᵢ*=0, β*ᵢ*=0), (α*ᵢ*=1, β*ᵢ*=0), (α*ᵢ*=1/√2, β*ᵢ*=1/√2), (α*ᵢ*=1/√2, β*ᵢ*=-1/√2).

4. Le procédé de distribution quantique de clé selon la revendication 1, qui utilise des paires de photons intriqués en tant qu'impulsions optiques, en particulier des impulsions optiques très faibles, et en outre une source de paires de photons intriqués est utilisée en tant qu'émetteur, et la clé cryptographique est générée entre deux récepteurs équipés d'un détecteur d'impulsions optiques sous la forme d'un détecteur à photon unique, dans lequel, sur la base des mesures du temps d'arrivée du photon effectuées pour les photons entrant depuis l'émetteur dans une superposition de 2*^{m}* impulsions chacune, les bits consécutifs de la clé cryptographique sont générés, tandis que chaque paire de photons mesurée permet de générer m bits de la clé cryptographique, et, au moyen de récepteurs, les paires de photons intriqués sont reçues dans une superposition de 2*^{m}* impulsions chacune, pour lesquelles la mesure du temps d'arrivée du photon est effectuée, selon une base sélectionnée aléatoirement parmi un ensemble de trois bases, générant des bits de la clé cryptographique sur la base des résultats des mesures du temps d'arrivée du photon, tandis que l'information sur les m identifiants des bases de mesure utilisées est échangée entre les récepteurs au moyen d'un canal de communication classique,
**caractérisé en ce que**
la mesure du temps d'arrivée des photons, qui sont dans la superposition de 2*^{m}* impulsions chacune, est effectuée dans une configuration à plusieurs étapes avec le nombre d'étapes m, dans lequel, à chaque étape, la séquence d'impulsions est divisée en deux sous-séquences égales ; la première sous-séquence est retardée dans le temps afin de la synchroniser avec la seconde sous-séquence, la phase des impulsions dans l'une des sous-séquences est décalée de la valeur déterminée par la base de mesure, et les sous-séquences sont ensuite interférées, de sorte qu'une impulsion unique avec une énergie d'au plus un photon mesurée dans l'une des 2*^{m}* positions temporelles est produite après la dernière étape, les bits de la clé cryptographique étant générés sur la base de cette position.

5. Un procédé de transmission d'impulsions optiques modulées dédié à la distribution quantique de clé, qui utilise un émetteur équipé d'une source d'impulsions de lumière laser, en particulier de très faibles impulsions de lumière laser, connecté à un modulateur de phase optique via une fibre optique, la clé cryptographique est transmise dans les qubits consécutifs au moyen d'un émetteur, dans lequel, pour chaque séquence de m qubits, l'émetteur transmet une séquence de 2*^{m}* d'impulsions de lumière laser, qui sont soumises à une modulation multi-états, mappant les bits de la clé cryptographique dans les états des qubits selon les bases de modulation sélectionnées aléatoirement parmi un ensemble d'au moins deux bases,
**dans lequel**
la modulation multi-états est une modulation de la phase des impulsions de lumière laser, dans laquelle, pour le premier des m bits de la clé cryptographique, une séquence de 2*^{m}* impulsions de lumière laser est divisée en deux sous-séquences comprenant un nombre égal de 2*^{m-1}* impulsions optiques, dans laquelle la phase des deux sous-séquences est déterminée sur la base de la valeur de bit de la clé cryptographique et de la base de modulation sélectionnée, et l'opération est ensuite répétée pour les *m-1* bits consécutifs, chaque fois en soumettant séparément deux fois plus court sous-séquences respectivement à la modulation.

6. Un procédé de transmission d'impulsions optiques modulées dédié à la distribution quantique de clé, qui utilise un émetteur équipé d'une source d'impulsions de lumière laser, en particulier de très faibles impulsions de lumière laser, connecté à un modulateur en quadrature *IQ* via une fibre optique, la clé cryptographique est transmise dans les qubits consécutifs au moyen d'un émetteur, dans lequel, pour chaque séquence de m qubits, l'émetteur transmet une séquence de 2*^{m}* d'impulsions de lumière laser, qui sont soumises à une modulation multi-états, mappant les bits de la clé cryptographique dans les états des qubits selon les bases de modulation sélectionnées aléatoirement parmi un ensemble d'au moins deux bases,
dans lequel la modulation multi-états est une modulation de l'amplitude complexe des impulsions de lumière laser, dans laquelle, pour le premier des m bits de la clé cryptographique, une séquence de 2*^{m}* impulsions de lumière laser est divisée en deux sous-séquences comprenant un nombre égal de 2*^{m-1}* impulsions optiques, dans laquelle l'amplitude complexe des deux sous-séquences est déterminée sur la base de la valeur de bit de la clé cryptographique et de la base de modulation sélectionnée, et l'opération est ensuite répétée pour les *m-1* bits consécutifs, chaque fois en soumettant deux fois plus court sous-séquences respectivement à la modulation.

7. Un procédé de réception d'impulsions optiques, dédié à la distribution quantique de clé, qui utilise des impulsions de lumière laser, en particulier de très faibles impulsions de lumière laser, en tant qu'impulsions optiques, et qui utilise en outre un récepteur équipé d'un détecteur à photon unique, dans lequel le récepteur reçoit une séquence de 2*^{m}* impulsions de lumière laser, qui sont soumises à une démodulation multi-états, mappant m états de qubits en m bits de la clé cryptographique selon une base de démodulation sélectionnée aléatoirement parmi ledit ensemble d'au moins deux bases,
**dans lequel**
la démodulation est effectuée dans une configuration à plusieurs étapes, le nombre d'étapes correspondant au nombre de qubits m, dans laquelle, à chaque étape, la séquence de 2*^{m}* impulsions de lumière laser est divisée en deux sous-séquences égales de 2*^{m-1}* impulsions, la première sous-séquence est retardée dans le temps afin de la synchroniser avec la seconde sous-séquence, la phase des impulsions dans l'une des sous-séquences est décalée d'une valeur correspondant à la base de démodulation sélectionnée, et les sous-séquences sont ensuite interférées, de sorte qu'une seule impulsion de lumière laser mesurée dans l'une des 2*^{m}* positions temporelles est produite après la dernière étape de la configuration, les bits de la clé cryptographique étant générés sur la base de cette position.

8. Procédé selon la revendication 7, **caractérisé en ce qu'**en outre, après interférence des sous-séquences, la polarisation de toutes les impulsions est tournée de l'angle θ déterminé séparément pour chacune des étapes de la configuration.

9. Un procédé de réception d'impulsions optiques, dédié à la distribution quantique de clé, qui utilise des paires de photons intriqués en tant qu'impulsions optiques, en particulier de très faibles impulsions optiques, et utilise en outre une paire de récepteurs équipés d'un détecteur à photon unique, dans lequel, sur la base des mesures du temps d'arrivée du photon effectuées pour les photons enregistrés dans le récepteur dans la superposition de 2*^{m}* d'impulsions de lumière chacune, les bits consécutifs de la clé cryptographique sont générés, dans lequel une source de paires de photons intriqués est utilisée en tant qu'émetteur, alors que chaque paire de photons mesurée permet de générer m bits de la clé cryptographique, et que les récepteurs reçoivent les paires de photons intriqués dans la superposition de 2*^{m}* impulsions optiques chacune, pour lesquelles la mesure du temps d'arrivée du photon au récepteur est effectuée selon une base sélectionnée aléatoirement parmi un ensemble d'au moins deux bases, générant les bits de la clé cryptographique sur la base des résultats des mesures du temps d'arrivée du photon au récepteur, tandis que l'information sur les m identifiants des bases de mesure utilisées est échangée entre les récepteurs au moyen d'un canal de communication classique,
**dans lequel**
la mesure du temps d'arrivée des photons au récepteur, qui sont dans la superposition de 2*^{m}* impulsions optiques chacune, est effectuée dans une configuration à plusieurs étapes avec le nombre d'étapes m, dans laquelle, à chaque étape, la séquence d'impulsions est divisée en deux sous-séquences égales de 2*^{m-1}* impulsions, la première sous-séquence est retardée dans le temps afin de la synchroniser avec la seconde sous-séquence, la phase des impulsions dans l'une des sous-séquences est décalée de la valeur déterminée par la base de mesure, et les sous-séquences sont ensuite interférées, de sorte qu'une seule impulsion avec une énergie d'au plus un photon mesurée dans l'une des 2*^{m}* positions temporelles est produite après la dernière étape, les bits de la clé cryptographique étant générés sur la base de cette position.

10. Un récepteur d'impulsions optiques, en particulier de très faibles impulsions optiques, en particulier sous forme de très faibles impulsions de lumière laser ou sous forme de photons uniques, dédié à la distribution quantique de clé, comprenant une entrée, des éléments optiques et un détecteur, qui comprend au moins un module (*T, ϕ*) ou (*T*, *ϕ, θ*) sur cette position. dans lequel le module comprend au moins un élément séparateur de polarisation, un élément introduisant la différence de chemins optiques pour chacune des polarisations séparées, et au moins une lame d'onde faisant tourner la polarisation (HWP, QWP), avec un angle de rotation de la polarisation θ fixe ou réglable, et dans lequel une partie du signal optique se propage dans un chemin plus court et une partie du signal optique se propage dans un chemin plus long,
**caractérisé en ce que**
le module (T, ϕ) ou (T, ϕ, θ) comprend au moins un modulateur de polarisation (PoIM), l'élément séparateur des polarisations est un cube séparateur de polarisation (PBS) placé après un modulateur de polarisation (PoIM), l'élément introduisant la différence de chemins optiques pour chacune des polarisations séparées est placé entre deux cubes séparateurs de polarisation (PBS), et en outre un élément introduisant le décalage de phase "ϕ" est placé dans au moins l'un des chemins optiques,
dans lequel lesdits éléments sont répartis et configurés pour effectuer la démodulation dans une configuration à plusieurs étapes, le nombre d'étapes correspondant au nombre de qubits m, dans laquelle, à chaque étape, la séquence de 2*^{m}* impulsions optiques est divisée en deux sous-séquences égales de 2^{m-1} impulsions optiques, la première sous-séquence est retardée dans le temps afin de la synchroniser avec la seconde sous-séquence, la phase des impulsions dans l'une des sous-séquences est décalée d'une valeur déterminée par la base de démodulation sélectionnée, et les sous-séquences sont ensuite interférées, de sorte qu'une seule impulsion de lumière laser mesurée dans l'une des 2*^{m}* positions temporelles est produite après la dernière étape de la configuration, les bits de la clé cryptographique étant générés sur la base de cette position.

11. Le récepteur selon la revendication 10, **caractérisé en ce qu'**il comprend au moins deux modules (T, ϕ) ou au moins deux modules (T, ϕ, θ), dans lequel, dans le premier de ces modules, le chemin optique destiné à une partie du signal optique est plus court, et le chemin optique destiné à la partie restante du signal optique est plus long, tandis que, dans chaque module consécutif, le chemin optique le plus long est deux fois plus court que le chemin optique le plus long dans le module qui le précède directement.

12. Le récepteur selon la revendication 10 ou 11, **caractérisé en ce qu'**il est équipé d'un détecteur à photon unique pour détecter les impulsions optiques, placé à la sortie de la configuration du récepteur.

13. Le récepteur selon l'une des revendications 10 à 12, **caractérisé en ce que** l'élément introduisant la différence de chemins optiques pour chacune des polarisations séparées est une fibre optique et/ou un chemin optique en espace libre.

14. Le récepteur selon l'une des revendications 10 à 13, **caractérisé en ce que** l'élément introduisant le décalage de phase "ϕ" est placé dans le chemin optique le plus long ou le chemin optique le plus court, entre deux cubes séparateurs de polarisation (PBS).

15. Le récepteur selon l'une des revendications 10 à 14, **caractérisé en ce qu'**il comprend un système de correction qui augmente l'angle d'acceptation du signal d'entrée.
